(19) Europäisches Patentamt
European Patent Office
Office européen des brevets

(11) **EP 4 592 741 A1**

(12) **EUROPÄISCHE PATENTANMELDUNG**

(43) Veröffentlichungstag:
**30.07.2025   Patentblatt 2025/31**

(21) Anmeldenummer: **25151891.6**

(22) Anmeldetag: **15.01.2025**

(51) Internationale Patentklassifikation (IPC):
**G02F 1/095** (2006.01)    **G02B 6/27** (2006.01)
**G02B 6/12** (2006.01)

(52) Gemeinsame Patentklassifikation (CPC):
**G02F 1/0955; G02B 6/2746;** G02B 2006/12145;
G02B 2006/12147; G02B 2006/12157

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **24.01.2024   DE 102024200644**

(71) Anmelder: **Fraunhofer-Gesellschaft zur Förderung
der angewandten Forschung e.V.
80686 München (DE)**

(72) Erfinder:
• **Abadian, Sevag
  13355 Berlin (DE)**
• **Tekin, Tolga
  13355 Berlin (DE)**
• **Sirbu, Marian
  13355 Berlin (DE)**
• **Symeonidis, Michail
  13355 Berlin (DE)**

(74) Vertreter: **Hersina, Günter et al
Schoppe, Zimmermann, Stöckeler
Zinkler, Schenk & Partner mbB
Patentanwälte
Radlkoferstrasse 2
81373 München (DE)**

(54) **MEHRLAGIGE SIGNALLEITSTRUKTUR UND VERFAHREN ZUM BETREIBEN EINER MEHRLAGIGEN SIGNALLEITSTRUKTUR**

(57)   Beschrieben ist eine Mehrlagige Signalleitstruktur umfassend: eine Mehrzahl an Schichten, wobei die Mehrzahl an Schichten mindestens zwei Wellenleiterschichten, welche sich entlang einer Erstreckungsrichtung erstrecken und welche zum Einkoppeln eines elektromagnetischen Signals dienen, und mindestens eine Zwischenschicht umfasst, die zwischen den mindestens zwei Wellenleiterschichten angeordnet ist; mindestens zwei Abdeckschichten, wobei die mindestens zwei Wellenleiterschichten teilweise oder vollständig zwischen den mindestens zwei Abdeckschichten angeordnet sind, wobei die mindestens eine Zwischenschicht ein magneto-optisches Material, MO, umfasst und/oder die mindestens zwei Abdeckschichten ein magneto-optisches Material, MO, umfassen. Ferner ist eine Verfahren zum Betreiben einer mehrlagigen Signalleitstruktur beschrieben.

Fig. 1

**Beschreibung**

Die vorliegende Erfindung beschreibt eine mehrlagige Signalleitstruktur und ein Verfahren zum Betreiben einer mehrlagigen Signalleitstruktur. Ein Prinzip einer effizienten Signalführung ist beschrieben, welches insbesondere in Schaltern, Zirkulatoren und Isolatoren Anwendung findet.

Datenzentren sind wesentliche Komponenten in der heutigen digitalen Landschaft und dienen als zentralisierte Knotenpunkte für die Verarbeitung, Speicherung und Verteilung von Daten. Die starke Verbreitung mobiler Anwendungen sowie die wachsende Komplexität dieser Anwendungen haben zu einem erheblichen Anstieg des Datenverkehrs geführt. Dieser Anstieg lässt sich auf Faktoren wie die zunehmende Nutzerbindung mit Smartphones, Augmented-Reality-Anwendungen, hochauflösendem Videostreaming und dem Internet der Dinge zurückführen. Folglich stehen Datenzentren vor der gewaltigen Herausforderung, den stark steigenden Anforderungen an den Datendurchsatz gerecht zu werden, was eine kontinuierliche Weiterentwicklung der Hardware- und Software-Infrastruktur erfordert. Die Optimierung des Datenzentren-Designs, einschließlich der Einführung von Hochleistungsrechnern, energieeffizienten Kühllösungen und fortschrittlichen Netzwerkprotokollen, ist unerlässlich geworden, um den ununterbrochenen Datenfluss zu gewährleisten, Latenzen zu minimieren und die ökologischen Auswirkungen des erhöhten Energieverbrauchs anzugehen.

Die Photonik ist ein vielversprechendes Instrument dabei, die zunehmenden Herausforderungen des Datenverkehrs in Datenzentren anzugehen. Photonische integrierte Schaltungen (PICs; PIC = Photonics Integrated Circuit) bieten das Potenzial, sowohl den Stromverbrauch als auch die Stellfläche zu reduzieren. In den letzten Jahrzehnten wurden kontinuierliche Anstrengungen unternommen, um photonische Komponenten mit unterschiedlichen Funktionalitäten zu entwickeln. Um den Datenverkehr zu lenken, sind effiziente und in Chips integrierbare Schalter und Zirkulatoren von großer Bedeutung. Darüber hinaus erfordern PICs, die integrierte oder externe Laser benötigen, den Einsatz optischer Isolatoren, um alle Signale zu blockieren, die sich zu der Quelle bewegen, die die Leistung beeinträchtigen könnten. Bis heute sind die vorgeschlagenen sperrigen Konfigurationen anspruchsvoll und bedeuten viele technologische Schritte zur Chip-Integration. Andererseits leiden wellenleitende Lösungen unter hohen Einfügungsverlusten (nachfolgend auch mit *I.L;* I.L = Insertion Loss abgekürzt) und weisen ein unbefriedigendes Isolationsverhältnis (nachfolgend auch mit *I.R;* I.R= Isolation Ratio abgekürzt) auf.

In den letzten Jahrzehnten sind die digitale Kommunikation und der Informationsaustausch exponentiell gewachsen. Es besteht ein zunehmender Bedarf an der Entwicklung von Schaltungen, die eine verbesserte Funktionalität bieten. Die Weiterentwicklung von Komponenten wie Schaltern, Zirkulatoren und Isolatoren, die eine zentrale Rolle bei der Ermöglichung eines effizienten und nahtlosen Datenflusses über verschiedene Anwendungen hinweg spielen, ist ein Muss.

Um diese Funktionalitäten zu erzielen, ist ein Medium erforderlich, das die räumliche und zeitliche Symmetrie aufbricht [1].

In den letzten Jahrzehnten wurden diese Komponenten sowohl experimentell als auch theoretisch nachgewiesen. Es wurden verschiedene Mechanismen mit unterschiedlichen Architekturen vorgeschlagen und gründlich erforscht, basierend auf Magneto-Optik (MO), Elektro-Optik (EO), Akusto-Optik (AO), Optomechanik (OM), photonischen Übergängen (PT), photonischen Kristallen (PhC) und piezoelektrischen (PZT) Wechselwirkungen.

Für Schalter wurden Konfigurationen mit Mikroringresonatoren (MRR) und Mach-Zehnder-Interferometern (MZI) untersucht und bewertet. Im MRR-Fall sorgt ein Mikroring für Resonanz bei einer bestimmten Wellenlänge ($\lambda_0$). Bei Anlegen eines externen Magnetfelds im Uhrzeigersinn (CW) und gegen den Uhrzeigersinn (CCW) wird die Resonanz rot oder blau verschoben. Mit der Nutzung einer solchen Vorrichtung wurde bei einer Wellenlängenverschiebung von 0,14 nm ein Extinktionsverhältnis von 21 dB bei $\lambda_0$ =1,561 $\mu$m erreicht [2].

Auch MZI-basierte MO-al-Schalter wurden erforscht. Sie bestehen in der Regel aus einer Kombination aus einem unsymmetrischen MZI, MMI-Kopplern, einer asymmetrischen Phasenvorspannung und einem MO-al-Phasenschieber. Bei $\lambda_0$ =1,541 $\mu$m und einer Vorrichtungslänge von 1,2 mm und einem Strom von $\pm$400 mA wurde ein Extinktionsverhältnis von 25 dB bei einem Energieverlust von I.L=10 dB beobachtet [2].

Ein anderer Ansatz wurde in [3] vorgestellt. Das Design umfasst zwei verjüngte Mehrmoden-Abschnitte, bei denen die transversal elektrischen Moden $TE_0$ und TE, gleichermaßen angeregt werden, wobei die TE,-Mode dann in eine transversal magnetische Mode TM umgewandelt wird. Im zentralen Wellenleiter des MO-Phasenschiebers erfährt die TM-Mode eine Phasenverschiebung. Die Phasendifferenz zwischen der TE- und TM-Mode bestimmt die Interferenz zwischen der $TE_0$- und $TE_1$-Mode des Ausgangs-Halbmodenwandlers. Wenn die TM-Mode eine Phasenverschiebung von $\pm\pi/2$ erfährt, wird der Ausgangsport des Lichtsignals durch Änderung der Magnetisierung ausgewählt. Für eine Vorrichtung mit L= 950$\mu$m wurden ein Energieverlust von I.L=6,7 dB und ein Isolationsverhältnis von I.R=19,9 dB bei $\lambda_0$ =1,5753 $\mu$m erhalten.

Für MO-Zirkulatoren wurden in [4] drei Wellenleiter mit einer metallischen Nanostäbchen-Heterostruktur gekoppelt, die in einem gleichmäßig magnetisierten MO-Material platziert ist. Bei $\lambda_0$=1,43 $\mu$m weist das System eine scharfe plasmonische Resonanz auf, und die Struktur verteilt die Eingangsleistung zwischen den Verbindungsarmen um, wobei bis zu 63 % der Leistung durch einen der Ausgangsports übertragen werden und der andere Ausgangsport fast vollständig isoliert ist.

Magneto-PhCs wurden auch theoretisch genutzt, um Zirkulatoren zu demonstrieren. Bei der Arbeit in einem einheitlichen externen Magnetfeld zeigten die Forscher eine deutliche Aufspaltung der Eigenfrequenzen der beiden gegenläufigen Moden. Unter Verwendung von drei PhC-Wellenleitern, die mit einem MO-Hohlraum gekoppelt sind, wurde ein Isolationsverhältnis ($I.R$) von 20 dB bei einer $\lambda_0$ =1,3 $\mu$m berechnet [5]. In ähnlicher Weise wurde in [6] $I.$R=30 dB für $\lambda_0$ =0,633 $\mu$m und $\lambda_0$ =1,55 $\mu$m gefunden.

Bei den Isolatoren war einer der ersten Versuche, das Prinzip der massiven Faraday-Isolatoren zu reproduzieren. Niedrige Vorwärts- und hohe *Rückwärts-Energieverluste (I.L.)* sind die Merkmale dieses massiven Isolators, der mit PICs nicht kompatibel ist. Dieser Isolator erfordert die Integration von Polarisatoren in das System, was erst noch gelingen muss. Von hier aus wird versucht, Isolatoren in wellenleitender Konfiguration zu realisieren [7].

Unter den verschiedenen MO-Effekten erscheint der TMOKE (Transversaler Magneto-Optischer Kerr-Effekt) als die am besten kompatible Lösung, da er den Vorteil hat, die Polarisation des Eingangslichts nicht zu beeinflussen.

Bei NRL (Non-Reciprocal Losses; nicht-reziproken Verlusten) wird die Kombination eines optischen Halbleiterverstärkers (SOA; SOA = Semiconductor Optical Amplifier) mit einer ferromagnetischen Beschichtung untersucht. Durch Injektion eines Stroms in die SOAs können die Verluste in Vorwärtsrichtung kompensiert werden. Das polarisationsabhängige Design konfiguriert die imaginäre Komponente des effektiven Brechungsindexes, was zu ungleichen Verlusten in den entgegengesetzten Ausbreitungsrichtungen führt. Bei der TM-Konfiguration [8], bei $\lambda_0$ =1,3 $\mu$m, wurde das Design validiert und zeigte etwa ein Isolationsverhältnis von $I.$R=99 dB/cm. Bei der TE-Konfiguration [9] wurde das Design bei $\lambda_0$ =1,55 $\mu$m validiert und zeigte $I.$R=14,7 dB/mm.

Beim NRPS-Effekt (Non-Reciprocal Phase Shift, nicht-reziproke Phasenverschiebung) wird eine Änderung des Realteils des effektiven Brechungsindexes beobachtet, was zu einer Phasendifferenz zwischen den Vorwärts- und Rückwärts-Signalen führt. Hier ist ein MZI mit einem magnetischen seltenen Granat bedeckt. Bei diesem passiven Design würde das Licht in Vorwärtsrichtung konstruktiv und in Rückwärtsrichtung destruktiv interferieren. Viele Forschungsgruppen haben sich die NRPS zunutze gemacht; ein Isolationsverhältnis von $I.$R=19 dB wurde bei einer Wellenlänge von $\lambda_0$ =1,54 $\mu$m mit einem Wellenleiter mit einer Länge von *L=8 mm* erreicht [10].

Bei Resonatorvorrichtungen haben viele Gruppen hoch resonante Mikroringe entwickelt. Die Ansätze variierten in Bezug auf die Geometrie (Radius) und die Platzierung (Füllmaterial: in der Scheibe, Hüllmaterial: auf dem Resonator aufgebracht). Für das erste Szenario wurden ein Isolationsverhältnis von $I.$R=20 dB, zusammen mit $I.L$ von weniger als 0,1 dB und einer Bandbreite von 0,4 nm gemessen [11]. Was die Mantel-Lösung betrifft, so zeigte ein erster Demonstrator einen Isolationsverhältnis $I.$R=19,5 dB für L= 290 $\mu$m [12], während ein zweiter 9 dB $I.R$ bei $\lambda_0$ =1,55 $\mu$m erreichte [13].

Magneto-plasmonische Isolatoren, die auf dem TMOKE-Effekt basieren, wurden ebenfalls untersucht. In diesem Fall wurden Granate und Metalle integriert, um die SPP-Begrenzung (SSP ist eine Abkürzung aus dem Englischen für: Surface Plasmon Polariton) entlang der Metall/Dielektrikum-Grenzfläche zu nutzen. Bei dem Design von magneto-plasmonischen MZIs erreichten die Forscher ein Isolationsverhältnis von $I.$R=22,82 dB bei niedrigem Energieverlust $I.L$ [14]. Andere nutzten einen magnetoplasmonischen Schlitzleiter, um eine LRSPP-Mode (LRSSP ist eine Abkürzung aus dem Englischen für: Long-Range Surface Plasmon Polariton) mit Hilfe eines Konus anzuregen. Dies führte zu einem Isolationsverhältnis von $I.$R=30 dB bei einer Wellenlänge von $\lambda_0$ =1.55 $\mu$m [15], obwohl vielversprechende Ergebnisse gezeigt wurden, aber für eine vollständige Vorrichtung mit Eingangs-/Ausgangskopplern würde der Isolator eine Isolationsverhältnis $I.$L>10 dB aufweisen.

Die seit 1988 veröffentlichten Prinzipien und Leistungen von MO- und Nicht-MO-Isolatoren sind in nachfolgender Tabelle 1 zusammengefasst.

| Jahr | Ref. | Autoren | Mode | Leitendes Material | Typ | $\lambda_0$ (µm) | I.R (dB) | I.L (dB) | L (mm) |
|------|------|---------|------|--------------------|-----|------------------|----------|----------|--------|
| 1988 | [16] | Ando | TE-TM | Granat | FR | 1.15 | 12.5 | 8.8 | 7 |
| 1989 | [17] | Castera | TE-TM | Granat | FR | 1.55 | 23 | 10 | - |
| 1996 | [18] | Levy | TE-TM | Granat | FR | 1.52 | 29 | 7 | 3.5 |
| 1996 | [19] | Sugimoto | TE-TM | Granat | FR | 1.55 | 25 | 3.2 | 3.02 |
| 1998 | [20] | Shintaku | TE-TM | Granat | FR | 1.535 | 27 | 5 | 4.1 |
| 2000 | [21] | Fujita | TM | Granat | NRPS | 1.54 | 19 | 13.6 | 8 |
| 2000 | [22] | Yokoi | TM | SOA & Ferromagnet | NRPS | 1.55 | 4.9 | - | - |
| 2006 | [23] | Van Parys | TM | SOA & Ferromagnet | NRL | 1.29 | 3.77 | 18 | 0.38 |
| 2006 | [24] | Shimizu | TE | SOA & Ferromagnet | NRL | 1.55 | 14.7 | 7.1 | 1 |
| 2007 | [25] | Kono | TM | Si & Granat | NMRR | 1.3 | 20 | 0.1 | 0.04 |
| 2008 | [26] | Shoji | TM | Granat | NRPS | 1.548 | 30 | 13 | 1.5 |
| 2009 | [27] | Montoya | TM | SOA & Granat | NRC | 1.55 | 30 | 3 | 0.05 |

| | | | | | | $\lambda_0$ | I.R. | I.L. | L |
|---|---|---|---|---|---|---|---|---|---|
| 2011 | [28] | Zhu | TM | Granat | NMRR | 0.633 | 20 | - | 0.003 |
| 2011 | [29] | Bi | TM | Si & Granat | NRPS | 1.542 | 19.5 | 18.8 | 0.29 |
| 2019 | [30] | Zhang | TE | Si & Granat | NRPS | 1.574 | 30 | 6 | 0.968 |
| 2019 | [31] | Srinivasan | TE-TM | Si & Granat | NRMC | 1.55 | 11 | 6 | 6 |
| 2021 | [32] | Abadian | TM | Au & Granat | MBPE | 1.55 | 30 | 10 | 0.01 |
| 2010 | [33] | Z. Yu | TE | Si | PT | 1.55 | 30 | 3.5 | 2.19 |
| 2012 | [34] | Wang | - | SOI | PhC | 1.582 | 13.5 | 6.47 | 0.006 |
| 2016 | [35] | Ruesink | TE/TM | SiO₂ | OM | 1.55 | 10 | 15 | 0.041 |
| 2020 | [36] | Kittlaus | TE | AlN & SOI | AO | 1.5237 | 16 | 0.6 | 15.3 |
| 2021 | [37] | Tian | TE/TM | AlN & SiN | PZT | 1.5426 | 9.3 | 0.8 | - |
| 202 | [38] | Goswami | TM | Si | PhC | 1.55 | 30 | 1 | 0.2 |
| 2023 | [39] | M. Yu | TE | LN | EO | 1.554 | 48 | 1.5 | 20 |

**Tabelle 1:** Zusammenfassung der verschiedenen Typen von optischen Isolatoren, MO (dunkelgrau) und Nicht-MO (hellgrau), ihrer Betriebspolarisation, ihrem Leitmaterial, ihrer Funktionswellenlänge $\lambda_0$ und ihren Eigenschaften I.R, I.L,L.

FR-basierte Designs (FR für Faraday Rotation basierter Isolator) sind sperrig und nicht für die Integration auf dem Chip geeignet. NRL- und NRPS-Designs erfordern zusätzliche SOAs mit komplexen technologischen Prozessen und besitzen einen hohen Energieverlust (*I.L.*). Resonatorstrukturen bieten ein großes Isolationsverhältnis (*I.R.*), sind jedoch aufgrund ihrer geringen Bandbreite stark eingeschränkt. Magnetoplasmonische Designs bieten eine zufriedenstellende Leistung, allerdings kann die Absorption aufgrund des Metalls die Intensität des Ausgangssignals stark beeinträchtigen. Nicht-MO-basierte Vorrichtungen leiden an großer Grundfläche und einem mäßigen *I.R.*

Eine Aufgabe der vorliegenden Erfindung ist es, eine mehrlagige Signalleitstruktur und ein Verfahren zum Betreiben einer mehrlagige Signalleitstruktur mit einer effizienten Signalführung bereitzustellen, bei welcher/welchen insbesondere ein geringer Energieverlust und ein gutes Isolationsverhältnis messbar sind.

Die Aufgabe wird durch einen mehrlagige Signalleitstruktur nach Anspruch 1 und einem Verfahren zum Betreiben einer mehrlagige Signalleitstruktur nach Anspruch 28 gelöst.

Vorschlagsgemäß umfasst die mehrlagige Signalleitstruktur eine Mehrzahl an Schichten, wobei die Mehrzahl an Schichten mindestens zwei, insbesondere dielektrische, Wellenleiterschichten , welche sich entlang einer Erstreckungsrichtung erstrecken und welche zum Einkoppeln eines elektromagnetischen Signals dienen, und mindestens eine, insbesondere dielektrische, Zwischenschicht, die zwischen den mindestens zwei Wellenleiterschichten angeordnet ist. Die mehrlagige Signalleitstruktur umfasst ferner mindestens zwei, insbesondere dielektrische, Abdeckschichten, wobei die mindestens zwei Wellenleiterschichten teilweise oder vollständig zwischen den mindestens zwei Abdeckschichten angeordnet sind. Vorschlagsgemäß umfasst die mindestens eine Zwischenschicht ein magneto-optisches Material, MO, und/oder die mindestens zwei Abdeckschichten (30) umfassen ein magneto-optisches Material, MO. Bevorzugt sind die mindestens zwei Wellenleiterschichten parallel zueinander in der mehrlagigen Signalleitstruktur positioniert. Insbesondere kann als Abdeckschicht auch eine Luftschicht dienen oder verschiedenen Materialen wie hierin beschrieben können verwendet werden. Die mindestens eine Zwischenschicht kann als Luftschicht ausgebildet sein oder verschiedenen Materialen wie hierin beschrieben können verwendet werden. Insbesondere können mehrere mehrlagige Signalleitstrukturen aufeinander, d.h. gestapelt (horizontal oder vertikal, d.h. entlang der y-Richtung und/oder entlang der z-Richtung), verwendet werden, um eine Signalführung effizient festzulegen. Beispielsweise können mindestens zwei mehrlagige Signalleitstrukturen gestapelt sein, um gekoppelte TMITE-Moden senkrecht zu oder in der Erstreckungsrichtung zu erhalten. Beispielhaft wird die mehrlagige Signalleitstruktur anhand von fünf Schichten beschrieben, um das Verständnis der Herleitung der Prinzipien der vorgeschlagenen technischen Lehre für den Leser der vorliegenden Anmeldung zu vereinfachen. Die vorgeschlagene mehrlagige Signalleitstruktur kann jedoch mehr als fünf Schichten aufweisen. Insbesondere kann an der mehrlagigen Signalleitstruktur ein externes Magnetfeld angelegt werden, wodurch bei Verwendung der mehrlagigen Signalleitstruktur elektromagnetische Signale, d.h. elektromagnetische Wellen, gezielt in eine vorgegebene Richtung oder in mehreren vorgegebenen Richtungen gezielt geleitet werden können. Während der ein Fluss der elektromagnetischen Signale in eine andere Richtung gezielt unterdrückt oder reduziert werden können. Bei Verwendung der mehrlagigen Signalleitstruktur in einem externen Magnetfeld können Signale in der mehrlagigen Signalleitstruktur effizient in eine oder mehreren vorgegebenen Richtungen geführt werden, im Wesentlichen ohne großen Energieverlust.

Gemäß einem weiteren Aspekt ist ein Verfahren zum Betreiben einer mehrlagige Signalleitstruktur beschrieben. Bei dem vorgeschlagene Verfahren wird eine mehrlagige Signalleitstruktur, wie hierin beschreiben, verwendet. Das Verfahren umfasst ein Bereitstellen einer mehrlagigen Signalstruktur, welche eine Mehrzahl an Schichten umfasst, wobei die Mehrzahl an Schichten mindestens zwei Wellenleiterschichten, welche sich entlang einer Erstreckungsrichtung erstrecken und welche zum Einkoppeln eines elektromagnetischen Signals dienen, und mindestens eine Zwischenschicht umfasst, die zwischen den mindestens zwei Wellenleiterschichten angeordnet ist. Außerdem umfasst die mehrlagige Signalleitstruktur mindestens zwei Abdeckschichten, wobei die mindestens zwei Wellenleiterschichten teilweise zwischen den mindestens zwei Abdeckschichten angeordnet sind, wobei die mindestens eine Zwischenschicht ein magneto-optisches Material, MO, umfasst und/oder die mindestens zwei Abdeckschichten ein magneto-optisches Material, MO, umfassen. Das Verfahren umfasst ferner ein Anlegen eines externen Magnetfeldes an die mehrlagige Signalleitstruktur, wodurch eine transversal-magnetische Mode, TM/TE-Mode, eines in die mehrlagige Signalleitstruktur eingebrachten elektromagnetischen Signales eine entlang einer Erstreckungsrichtung der mindestens zwei Wellenleiterschichten ausgerichtete Änderung ihres elektromagnetischen Feldprofiles erfährt.

Die Offenbarung zu der mehrlagigen Signalleitstruktur trifft auch auf das offenbarte Verfahren zu, wobei die Einzelheiten aus Redundanzgründen nicht wiederholt werden. Vielmehr wird auf die Beschreibung zu der mehrlagigen Signalleitstruktur verweisen.

Die vorgeschlagene Erfindung beschreibt ein neuartiges Verfahren und eine neuartige mehrlagige Signalleitstruktur zur Signalführung, das implementiert werden könnte, um effiziente photonische Schalter, Zirkulatoren und Isolatoren mit vernachlässigbarem Energieverlust *I.L.* und geringem Stromgebrauch zu erzielen. Die entwickelten Komponenten sind einfach und unkompliziert, alle Designs basieren auf einer mehrschichtigen, in den Figuren insbesondere fünfschichtigen dargestellten, magneto-optischen (MO-)Heterostruktur oder auch Signalleitstruktur vorliegen genannt, bei der gekoppelte optische Moden, insbesondere in parallelen dielektrischen, Wellenleitern in Gegenwart eines MO-Materials, das extern magnetisiert wird, Leistung austauschen.

Die vorgeschlagene Erfindung betrifft insbesondere drei optische Komponenten, nämlich: Schalter, Zirkulatoren und Isolatoren, welche insbesondere vollständig in dielektrischem Format und auf der Basis von MO-s aufgebaut sind, um die PIC-Integration zu ermöglichen.

Die vorgeschlagene Erfindung erfordert keine komplexen technologischen Schritte zur Herstellung und hat den Vorteil einer einfachen Integration in PICs. Darüber hinaus kann für jedes MO-Material (jedes Gyrotropieniveau) eine 100%-Leistung durch Modifizieren der geometrischen Abmessungen der Heterostruktur oder auch Signalleitstruktur genannt erreicht werden. Im Gegensatz zu anderen Designs wirkt sich dies nicht auf die Leistung der Komponente aus, da sich das Eingangssignal hier in den, insbesondere dielektrischen, Wellenleitern ohne große Wechselwirkung mit dem MO-Material selbst ausbreitet, was das Design in Bezug auf einen Energieverlust *I.L.* tolerierbar macht, der auf weniger als einige db/cm geschätzt werden kann. Schließlich benötigen diese Komponenten bei Verwendung ein an die Signalleitstruktur angelegtes externes Magfeld, das in der TMOKE-Konfiguration an die Signalleitungsstruktur angelegt wird. Das externe Magnetfeld kann über einen Seltenerdmagneten oder einen Elektromagneten bereitgestellt werden.

Bevorzugte Ausführungsbeispiele der vorliegenden Erfindung werden nachfolgend Bezug nehmend auf die beiliegenden Zeichnungen detailliert erläutert. Es zeigen:

Fig. 1         eine Draufsicht auf eine erste Konfiguration der mehrlagigen Signalleitstruktur, wobei das MO-Material zwischen den mindestens zwei, insbesondere parallelen, Wellenleitschichten angeordnet ist;

Fig. 2   eine Draufsicht auf eine zweite Konfiguration der mehrlagigen Signalleitstruktur, wobei das MO-Material auf zwei der mindestens zwei, insbesondere parallelen, Wellenleitschichten angeordnet ist;

Fig. 3a, b   eine Draufsicht auf eine dritte Konfiguration der mehrlagigen Signalleitstruktur, wobei das MO-Material auf zwei der mindestens zwei, insbesondere parallelen, Wellenleitschichten angeordnet ist und wobei das MO-Material zwischen den mindestens zwei, insbesondere parallelen, Wellenleitschichten angeordnet ist (siehe Figs. 3a und 3b);

Fig. 4   Draufsicht auf eine erste Partition der mehrlagigen Signalleitstruktur mit nur einer Wellenleitschicht, d.h. Wellenleiter a.

Fig. 5   Draufsicht auf eine weitere Partition der mehrlagigen Signalleitstruktur mit nur einer Wellenleitschicht, d.h. Wellenleiter $b$.

Fig. 6   ein Verhältnis (Ratio), welches für verschiedene Gyrotropiewerte (g= 0,1; 0,05; 0,01) und in Abhängigkeit der variierenden Breite der mindestens einen Zwischenschicht (gap width) berechnet wurde;

Fig. 7   Kopplungslängendarstellungen (coupling length), berechnet für verschiedene Gyrotropiewerte g (g= 0,1; 0,05; 0,01) in Abhängigkeit von der Variation Breite der mindestens einen Zwischenschicht (gap width);

Fig. 8   ein Verhältnis (Ratio), welches für verschiedene Gyrotropiewerte (g= 0,01; 0,005; 0,001) und in Abhängigkeit der variierenden Breite der mindestens einen Zwischenschicht (gap width) berechnet wurde;

Fig. 9.   Kopplungslängendarstellungen (coupling length), berechnet für verschiedene Gyrotropiewerte g (g= 0,01; 0,005; 0,001) in Abhängigkeit von der Variation Breite der mindestens einen Zwischenschicht (gap width);

Fig. 10   die Leistung P in den mindestens zwei Wellenleitschichten (Wellenleiter a (schwarz) und b (grau)) der mehrlagigen Signalleitstruktur als Funktion der Kopplungslänge Lc, welche beispielsweise in einem Schalter oder einem Zirkulator Anwendung findet;

Fig. 11   die Leistung P in den mindestens zwei Wellenleitschichten (Wellenleiter a (schwarz) und b (grau)) der mehrlagigen Signalleitstruktur in Vorwärtsrichtung als Funktion der doppelten Kopplungslänge 2Lc, welche beispielsweise in einem Isolator Anwendung findet;

Fig. 12   die Leistung P in den mindestens zwei Wellenleitschichten (Wellenleiter a (schwarz) und b (grau)) der mehrlagigen Signalleitstruktur in Rückwärtsrichtung als Funktion der doppelten Kopplungslänge 2Lc, welche beispielsweise in einem Isolator Anwendung findet;

Fig. 13   ein Flussdiagramm eines Verfahrens zum Betreiben der mehrlagigen Signalleitstruktur;

Fig. 14   Draufsicht auf einen dielektrischen MO-Schalter mit nach innen gerichtetem externen Magnetfeld, mit Lichteintritt durch einen ersten Eingangsanschluss Port $I_1$ und Lichtaustritt durch einen zweiten Ausgangsanschluss Port $O_1$;

Fig. 15   Draufsicht auf einen dielektrischen MO-Schalter mit nach außen gerichtetem externen Magnetfeld, mit Lichteintritt durch einen ersten Eingangsanschluss Port $I_1$ und Lichtaustritt durch einen zweiten Ausgangsanschluss Port $O_2$;

Fig. 16   Draufsicht auf einen dielektrischem MO-Zirkulator mit Lichteintritt durch einen ersten Eingangsanschluss Port $I_1$ und Lichtaustritt durch einen zweiten Ausgangsanschluss Port $O_2$;

Fig. 17   Draufsicht auf einen dielektrischem MO-Zirkulator mit Lichteintritt durch einen zweiten Eingangsanschluss Port $I_2$ und Lichtaustritt durch einen dritten Ausgangsanschluss Port $O_3$;

Fig. 18   Draufsicht auf einen dielektrischem MO-Zirkulator mit Lichteintritt durch einen dritten Eingangsanschluss

Port $I_3$ und Lichtaustritt durch einen ersten Ausgangsanschluss Port $O_1$;

Fig. 19    Draufsicht auf einen dielektrische MO-Isolator mit Licht, das sich in Vorwärtsausbreitungssinn bewegt; und

Fig. 20    Draufsicht auf einen dielektrische MO-Isolator mit Licht, das sich in Rückwärtsausbreitungssinn bewegt.

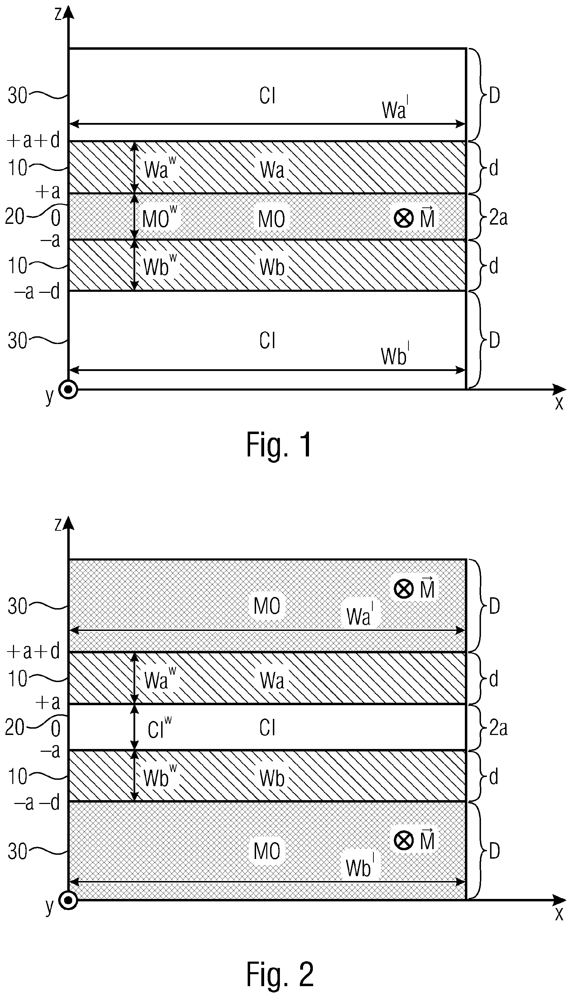

Einzelne Aspekte der hierin beschriebenen Erfindung sind nachfolgend in den Figuren 1 bis 20 beschrieben. In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt sein müssen.

Wenn eine Komponente als "dazu ausgebildet ist, etwas zu tun" hierin beschrieben ist, soll es bedeuten, dass die Komponente entsprechend baulich und physikalisch so gestaltet worden ist, damit die Komponenten das, was sie ausführen soll, auch auszuführt.

Vorliegend ist mit dem Begriff Signal eine elektromagnetische Welle gemeint. Die Begriffe Signal und elektromagnetische Welle werden synonym zueinander verwendet. Ebenso werden die Begriffe Wellenleitschicht und Wellenleiter synonym zueinander verwendet.

Die vorgeschlagene mehrlagige Signalleitstruktur 100 umfasst eine Mehrzahl n an Schichten, wobei die Mehrzahl n an Schichten mindestens zwei Wellenleiterschichten 10, insbesondere eines erste Wellenleiterschicht a und eine zweite Wellenleiterschicht b, welche sich entlang einer Erstreckungsrichtung x erstrecken und welche zum Einkoppeln eines elektromagnetischen Signals dienen, und mindestens eine Zwischenschicht 20, die zwischen den mindestens zwei Wellenleiterschichten 10 angeordnet ist. Die mehrlagige Signalleitstruktur 100 umfasst ferner mindestens zwei Abdeckschichten 30, wobei die mindestens zwei Wellenleiterschichten 10 teilweise oder vollständig zwischen den mindestens zwei Abdeckschichten 30 angeordnet sind. Vorschlagsgemäß umfasst die mindestens eine Zwischenschicht 20 ein magneto-optisches Material, MO, und/oder umfassen die mindestens zwei Abdeckschichten 30 ein magneto-optisches Material, MO. Diese drei möglichen Konfigurationen der mehrlagigen Signalleitstruktur 100 sind schematisch in den Figs. 1 bis 3 gezeigt. Das MO-Material kann beispielsweise auch ein ferromagnetisches Metall oder ein Halbmetall oder ein Halbleiter sein. Die mindestens zwei Wellenleiterschichten 10 können beispielsweise sein: ein Dielektrikum wie Silizium Si, Siliziumnitrid SiN, Polymer oder Epoxid oder ein Hybrid bestehend aus einem Dielektrikum und einem Metall.

Die mindestens eine Zwischenschicht 20 kann aus ferromagnetischen Metallen wie Kupfer CU oder Eisen FE, mit Eisennanopartikeln dotiertem Siliciumdioxid oder Polymeren, oder Granaten wie YIG, BIG, TIG, GGG bestehen, die zur Verstärkung ihrer MO-Effekte weiter dotiert werden können. Jedoch werden dielektrische Materialen für die Schichten 10, 20, 30 bevorzugt. Die mindestens zwei Abdeckschichten können beispielsweise durch SiO2 oder Luft gegeben sein, jedoch nicht durch ein Metall.

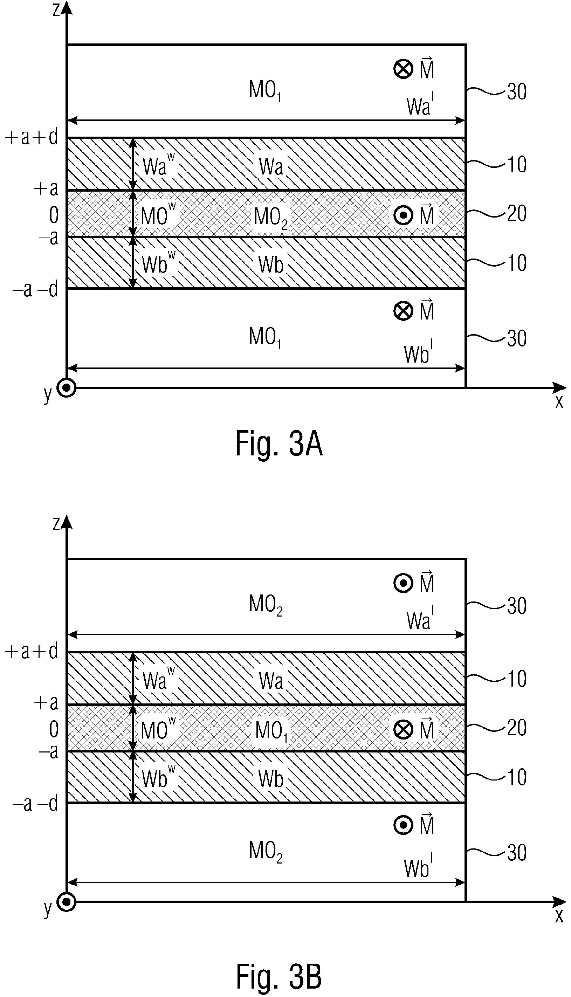

Fig. 1 zeigt eine Draufsicht auf eine erste Konfiguration der mehrlagigen Signalleitstruktur 100, wobei das MO-Material zwischen den mindestens zwei, insbesondere parallelen, Wellenleitschichten 10 angeordnet ist. Gemäß der ersten Konfiguration umfasst die mindestens eine Zwischenschicht 20 das MO-Material. Fig. 2 zeigt eine Draufsicht auf eine zweite Konfiguration der mehrlagigen Signalleitstruktur, wobei das MO-Material auf zwei der mindestens zwei, insbesondere parallelen, Wellenleitschichten angeordnet ist. Gemäß der zweiten Konfiguration umfassen die mindestens zwei Abdeckschichten 30 das MO-Material. Figs. 3a und 3b zeigen eine Draufsicht auf eine dritte Konfiguration der mehrlagigen Signalleitstruktur, wobei das MO-Material auf zwei der mindestens zwei, insbesondere parallelen, Wellenleitschichten angeordnet ist und wobei das MO-Material zwischen den mindestens zwei, insbesondere parallelen, Wellenleitschichten angeordnet ist.

Gemäß der dritten Konfiguration umfassen die mindestens eine Zwischenschicht 20 ein zweites MO-Material und die mindestens zwei Abdeckschichten 30 ein erstes MO-Material. Das erste und das zweite MO-Material können voneinander unterschiedlich sein. Insbesondere weisen das erste und das zweite MO-Material unterschiedliche Gyrotropiewerte g auf. Insbesondere sind die auf das erste und das zweite MO-Material ausgeübten externen Magnetfelder entgegengesetzt gerichtet. Hierzu werden zwei zueinander entgegen ausgerichtete Magnetfelder an den zwei gleichen oder unterschiedlichen MO-Materialien angelegt, indem lokal Permanentmagnete an den MO-Materialen entsprechen abgeschieden werden.

In den Figs. 1 bis 3a, 3b sind jeweils ein Koordinatensystem (x,y,z) eingezeichnet. Wie den Figs. 1 bis 3a, 3b ferner zu entnehmen ist, erstreckt sich die Erstreckungsrichtung entlang der x-Achse. Die verschiedenen Schichten 10, 20, 30 weisen eine Länge entlang der Erstreckungsrichtung entlang der x-Achse auf. Entlang der z-Achse weisen die Schichten 10, 20, 30 jeweils eine Dicke auf. Eine einzige Wellenleitschicht 10, a, b weist eine Dicke d auf. Eine einzige Zwischenschicht 20 in den Figs. 1 bis 3a, 3b weist eine Dicke 2a auf. Eine einzige Abdeckschicht 1 bis 3a, 3b weist eine Dicke D auf.

Die Schichten 10, 20, 30 sind bevorzugt unmittelbar direkt aufeinander angeordnet, wie diese den Figs. 1 bis 3, 3b zu entnehmen ist.

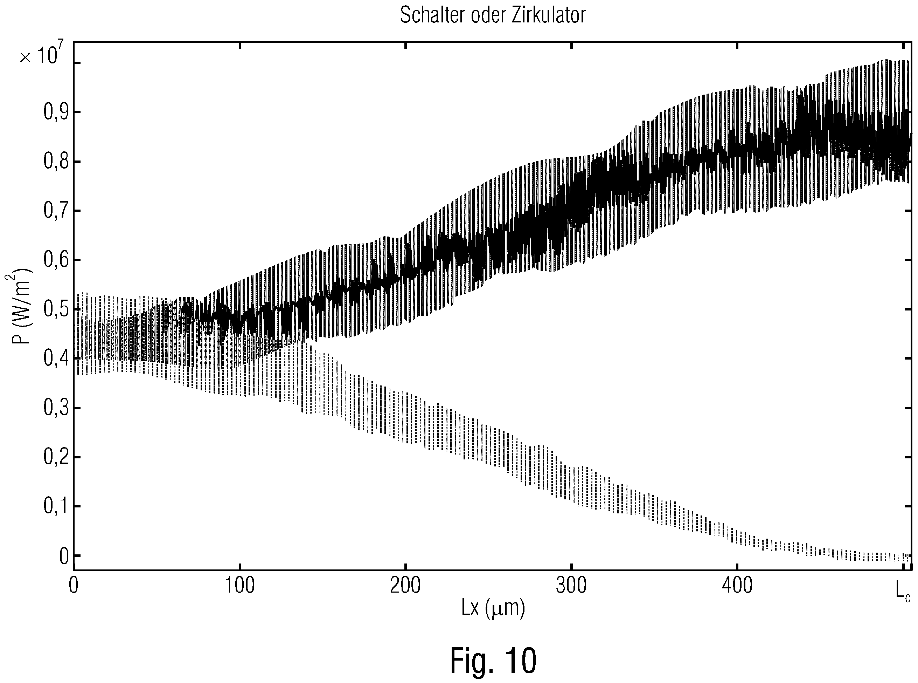

An die mehrlagige Signalleitstruktur 100 ist ein externes Magnetfeld anlegbar oder angelegt, wodurch ein optischer Modus, beispielsweise eine transversal-magnetische Mode, TM-Mode, und/oder eine transversal-elektrische Mode , TE-Mode, des in den mindestens zwei Wellenleiterschichten 10 eingekoppelten elektromagnetischen Signals eine entlang der Erstreckungsrichtung der mindestens zwei Wellenleiterschichten 10 ausgerichtete Änderung ihres magnetischen Feldprofiles erfährt. Die Änderung des magnetischen Feldprofiles (i.e. einer resultierenden Magnetisierung) wirkt sich auf eine gemessene Leistung P aus, wie diese zum Beispiel in den Figs. 10, 11 und 12 zu sehen ist, was nachfolgend noch im Einzelnen beschrieben werden wird. In Figs. 1 bis 3a, 3b ist beispielsweise schematisch die Ausrichtung des Magnetfeldes zu erkennen. In Fig. 1 ist zu sehen, dass die Magnetisierung nach innen gerichtet ist.

Es sei bemerkt, dass mit der vorliegenden Erfindung mindestens eine transversal-magnetische Mode, TM-Mode, und/oder mindestens eine transversal-elektrische Mode , TE-Mode, in der mehrlagigen Signalleitstruktur 100 erzeugbar ist/sind, insbesondere welche sich in Erstreckungsrichtung der mindestens zwei Wellenleiterschichten ausbreiten.

In Fig. 1 umfasst die mindestens eine Zwischenschicht 20 das MO-Material, wodurch das externe Magnetfeld nach innen gerichtet ist (siehe x im Kreis in Schicht 20 in Fig. 1). In

Fig. 2 umfassen die mindestens zwei Abdeckschichten 30 das MO-Material, wodurch eine Magnetisierung auch in diesem Fall nach innen gerichtet ist.

In Figs. 3a und 3b umfassen die Schichten 20 (mindestens eine Zwischenschicht) und 30 (die mindestens zwei Abdeckschichten) das MO Material, insbesondere bestehen die Schichten 20 und 30 aus dem MO-Material. Die angelegte äußere Magnetisierung ist dabei entgegengesetzt gerichtet (nach innen und außen bzw. nach außen und innen). Je nach Orientierung des externen angelegten Magnetfeldes ist die Magnetisierung in dem MO Material nach Außen (Schichten 30 und nach Innen (Schicht 20) (Fig. 3a) oder nach Innen (in Schichten 30) nach Außen (in Schicht 20) (Fig. 3b) ausgerichtet ist. Gemäß Fig. 3b ist die Magnetisierung der mindestens zwei Abdeckschichten nach innen gerichtet. Die Magnetisierung der mindestens einen Zwischenschicht 20 ist nach Außen gerichtet. Die Magnetisierung verläuft in den Schichten 20 und 30 in entgegengesetzten Richtungen.

Entsprechend ist gemäß Fig. 3a die Magnetisierung der mindestens zwei Abdeckschichten 30 nach außen gerichtet. Die Magnetisierung der mindestens einen Zwischenschicht 20 ist nach innen gerichtet. Die Magnetisierung verläuft in den Schichten 20 und 30 auch in Fig. 3a in entgegengesetzten Richtungen. Mit anderen Worten, das lokale äußere Magnetfeld, das auf das MO-Material in der Mitte wirkt, ist dem entgegengesetzt, das auf das MO außerhalb der Wellenleiter wirkt. Die Magnetisierung verläuft in den Schichten 20 und 30 folglich gegenläufig.

Entgegengesetzte Magnetfelder in den mindesten zwei MO-Schichten können dadurch erzeugt werden, in dem Magnete auf den unterschiedlichen MO-Schichten abgeschieden werden und die Magnete unabhängige voneinander kontrolliert werden. Hierbei können Permanentmagnet oder auch nicht Permanentmagnete auf den MO-Schichten angeordnet werden.

Bei magneto-optischen Werkstoffen wird die Magnetisierungsrichtung durch ein von außen angelegtes Magnetfeld beeinflusst. Der Begriff "Magnetisierungsrichtung" bezieht sich in der Regel auf die Ausrichtung der magnetischen Momente innerhalb des MO-Materials. Ohne ein äußeres Magnetfeld können die magnetischen Momente zufällig ausgerichtet sein oder den kristallographischen Achsen des Materials folgen.

Sofern ein externes Magnetfeld an dem MO-Material oder an den Materialen angelegt wird, kann das externe Magnetfeld eine bevorzugte Ausrichtung der magnetischen Momente induzieren (ausrichten). Die Ausrichtung der magnetischen Momente beeinflusst die optischen Eigenschaften des MO-Materials oder der MO-Materialien, wie beispielsweise die Fähigkeit des MO-Materials, die Polarisationsebene des Lichts zu drehen, was die Grundlage für magneto-optische Effekte ist. Zusammenfassend lässt sich also sagen, dass die Magnetisierung des Materials und das angelegte externe Magnetfeld Hand in Hand gehen, die Magnetisierung der Schicht existiert nicht ohne das von außen angelegte Magnetfeld.

In der Physik wird die Darstellung von Vektoren, z. B. in einem Magnetfeld, häufig verwendet, um ihre Ausrichtung in Bezug auf die Bildebene zu zeigen. Wird ein Vektor, dargestellt als ein Kreis mit einem Punkt, bedeutet dies, dass er in die Bildebene zeigt. Wird der Vektor als Kreis mit einem Kreuz dargestellt, zeigt er aus der Bildebene heraus.

Bevorzugt sind die mindestens zwei Wellenleiterschichten 10 und/oder mindestens eine Zwischenschicht 20 und/oder die mindestens zwei Abdeckschichten 30 dielektrisch. In diesem Fall handelt es sich bei der mehrlagigen Signalleitstruktur um einer mehrlagige dielektrische Signalleitstruktur. Die bereit beschriebene mehrlagigen Signalleitstruktur könnte mindestens eine dielektrische Schicht 10, 20, 30 umfassen. Es ist auch denkbar, dass jede der Schichten 10, 20, 30 dielektrisch ausgebildet ist.

Das externe Magnetfeld kann durch ein Seltene-Erden-Magnet oder durch einen Elektromagneten gegeben sein, welcher dazu ausgebildet ist, das MO-Material zu sättigen.. Bevorzugt wird der Elektromagnet verwendet. Der Elektromagnet kann eine dünne Metallschicht oder eine Halbmetallschicht oder eine Halbleiterschicht umfassen, welche direkt auf dem MO-Material oder auf einer der mindestens zwei Abdeckschichten 30 angeordnet ist. In Bezug zu Fig. 1 könnte der Elektromagnet (nicht gezeigt in Fig. 1) auf dem MO Material der mindestens einen Zwischenschicht 20 angeordnet sein oder auf den mindestens zwei Abdeckschichten 30.

Eine Wellenausbreitung des in die mindestens zwei Wellenleiterschichten 10 eingekoppelten elektromagnetischen Signals ist jeweils, insbesondere individuell, durch eine Ausbreitungskonstante $\beta_a$, $\beta_b$ beschrieben, wobei die Ausbreitungskonstanten $\beta_a$, $\beta_b$ der mindestens zwei Wellenleiterschichten 10 unterschiedlich sind, $\beta_a \neq \beta_b$. Dass die Ausbreitungskonstanten $\beta_a$, $\beta_b$ unterschiedlich sind, ist auf das Vorhandensein der MO-Schicht zurückzuführen, was zu einem Bruch der räumlichen Symmetrie führt. Wann immer mindestens ein MO-Material in einer der drei Konfigurationen vorhanden ist, unterscheiden sich die Ausbreitungskonstanten $\beta_a$, $\beta_b$ in den Einzelnen Wellenleitschichten 10, a, b voneinander.

Bei angelegten externen Magnetfeld breitet sich in mindestens einer Wellenleiterschicht 10, a, b, der mindestens zwei Wellenleiterschichten 10, a, b mindestens eine, insbesondere optische, TM-Mode oder TE-Mode entlang der Erstreckungsrichtung aus, wobei mindestens eine, insbesondere, gerade TM-Mode (TE-Mode) durch eine erste Ausbreitungskonstante $\beta_e$ und eine, insbesondere optische, ungerade TM-Mode (TE-Mode) durch eine zweite Ausbreitungskonstante $\beta_o$ beschrieben ist, wobei die mindestens zwei Wellenleiterschichten 10, a, b jeweils durch die weiteren Ausbreitungskonstanten $\beta_a$, $\beta_b$, welche bereits beschrieben worden sind, beschrieben sind, wobei bei einem Verhältnis der Ausbreitungskonstanten von

$$Verh\ddot{a}ltnis = \frac{\beta_a - \beta_b}{\beta_e - \beta_o} = 0.707107 == \frac{1}{\sqrt{2}}$$

eine maximale Leistungsübertragung erfolgt, wobei $\beta_a$ die Ausbreitungskonstante der, insbesondere optischen, TM-Mode der ersten Wellenleiterschicht 10, a der mindestens zwei Wellenleiterschichten 10 *und* $\beta_b$ die Ausbreitungskonstante der, insbesondere optischen, TM-Mode der zweiten Wellenleiterschicht 10, b der mindesten zwei Wellenleiterschichten 10 ist. Die Aussagen zur TM-Mode treffen auch auf eine elektrische Mode, TE-Mode, zu.

Jede Wellenleiterschicht 10, a, b definiert aufgrund ihrer Beschaffenheit eine Kopplungslänge, so dass die in die Wellenleiterschicht 10, a, b eingebrachten gekoppelten Moden nach Zurücklegen der Kopplungslänge Lc entkoppelt sind. Außerdem sollten sich diese Moden über eine als "Kopplungslänge" bezeichnete Entfernung ausbreiten, um sich zu entkoppeln, so dass am Ende nur eine Mode von ihnen übrigbleibt, deren Leistung ausschließlich in einem der, insbesondere parallelen, Wellenleitern a, b konzentriert ist. Die Kopplungslänge Lc ist eine Funktion der ersten und zweiten Ausbreitungskonstanten $\beta_e$, $\beta_o$ der geraden und ungeraden Moden und ist gegeben durch:

$$L_c = \frac{\pi}{\beta_e - \beta_o}$$

Jedes in der mehrlagigen Signalstruktur 100 verwendetes MO-Material weist ein gyrotropisches Niveau oder verschiedene gyrotropische Niveaus auf. Gemäß der ersten Konfiguration, bei der die mehrlagige Signalleitstruktur 100 in der mindestens einen Zwischenschicht 20 ein MO-Material umfasst, weist das MO-Material ein einziges gyrotropisches Niveau auf. Gemäß der zweiten Konfiguration, bei der die mehrlagige Signalleitstruktur 100 in der mindestens zwei Abdeckschichten 30 jeweils ein MO-Material umfasst, können zwei verschiedene gyrotropische Niveaus vorhanden sein. Jedoch sollte die externe Magnetisierung jeweils in dieselbe Richtung zeigen. Gemäß der dritten Konfiguration, bei der die mindestens eine Zwischenschicht 20 und die mindestens zwei Abdeckschichten 30 jeweils ein MO Material umfassen, können bis zu drei verschiedene gyrotropische Niveaus vorhanden sein.

Das externe Magnetfels in der mindestens einen Zwischenschicht sollte jedoch zu dem externen Magnetfeld in den mindestens zwei Abdeckschichten 30 entgegengesetzt sein. Bevorzugt weisen die mindestens zwei Abdeckschichten 30 jeweils dasselbe gyrotropische Niveau auf, was sich aber von dem gyrotropische Niveau in der mindestens einen Zwischenschicht 20 unterscheiden kann. Denkbar ist es aber auch, dass alle drei gyrotropische Niveaus gleich sind.

Eine, insbesondere geometrische, Länge L der mindestens zwei Wellenleiterschichten 10 und eine, insbesondere geometrische, Länge L' der mindestens einen Zwischenschicht 20 sind bevorzugt gleich lang ausgebildet. Insbesondere entspricht die geometrische Länge L einem Vielfachen der Kopplungslänge Lc. Die Kopplungslänge Lc beispielsweise hängt von vielen verschiedenen Faktoren ab, wie beispielsweise der Wellenlänge des elektromagnetischen Signals und/oder von einem Längen-Dicke-Index der Wellenleitschicht 10 und/oder dem genutzten MO-Material oder den genutzten MO-Materialien. Bei dem Längen-Dicke-Index der Wellenleitschicht 10 ist die geometrische Länge L und die geometrische Dicke der Wellenleitschicht 10 gemeint. Bei einem Isolator beispielsweise entspricht die geometrische Länge L bevorzugt der zweifachen Kopplungslänge Lc. Denn das in die Wellenleitschichten 10 einfallende Licht muss sich entkoppeln und dann wieder koppeln. Bei einem Schalter beispielsweise hingegen entspricht die geometrische Länge L bevorzugt der einfachen Kopplungslänge Lc. Denn das in die Wellenleitschichten 10 einfallende Licht muss sich nur entkoppeln.

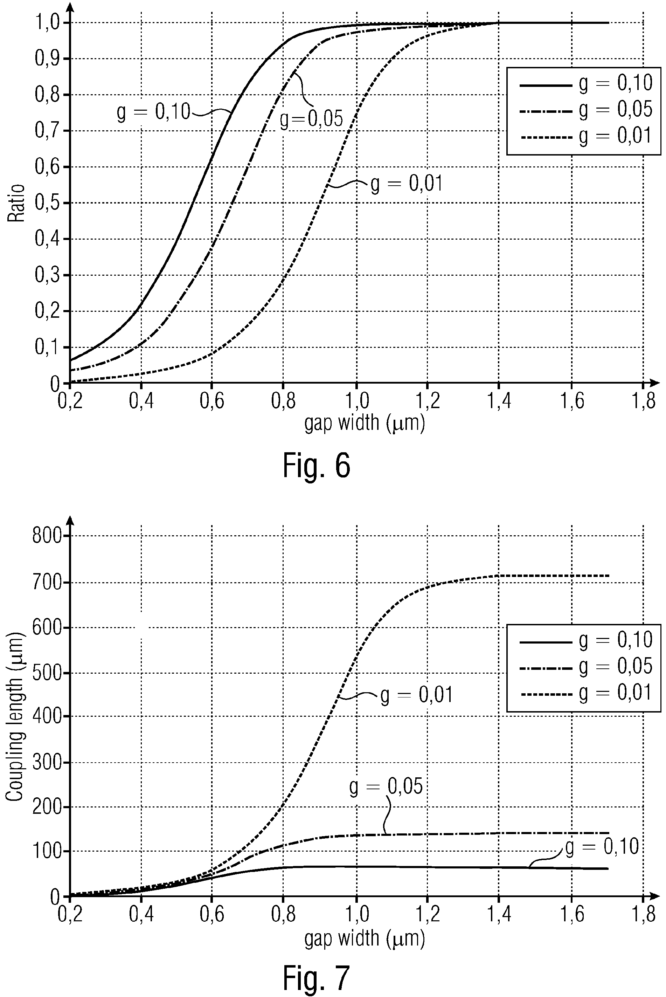

Fig. 6 zeigt in ein Verhältnis ($Ratio = \frac{\beta_a - \beta_b}{\beta_e - \beta_o}$) aus den zwei Ausbreitungskonstanten $\beta_a$, $\beta_b$ und den geraden und ungeraden Moden $\beta_e$, $\beta_o$. Das Verhältnis ($Ratio = \frac{\beta_a - \beta_b}{\beta_e - \beta_o}$) wurde für eine konstante Dicke d (d gibt die Breite entlang der z-Richtung eines Wellenleiters a, b an) der mindestens zwei Wellenleiterschichten 10 in Abhängigkeit der mindestens einen Zwischenschicht 20 (2a, Spaltbreite) für verschiedene Gyrotropiewerte g berechnet. Dieses Verhältnis ist in der Fig. 6 gegenüber der der Breite 2a der mindestens einen Zwischenschicht 20 (gap width) für verschiedene Gyrotropiewerte g dargestellt. Fig. 7 zeigt passend zu Fig. 6 eine Darstellung der Kopplungslänge (coupling length), berechnet für verschiedene Gyrotropiewerte g in Abhängigkeit von der Variation Dicke 2a der mindestens einen Zwischenschicht 20 (gap width). Die verschiedene Gyrotropiewerte g in den Figs. 6 und 7 betragen g=0,1 und g=0,05 und g=0,01.

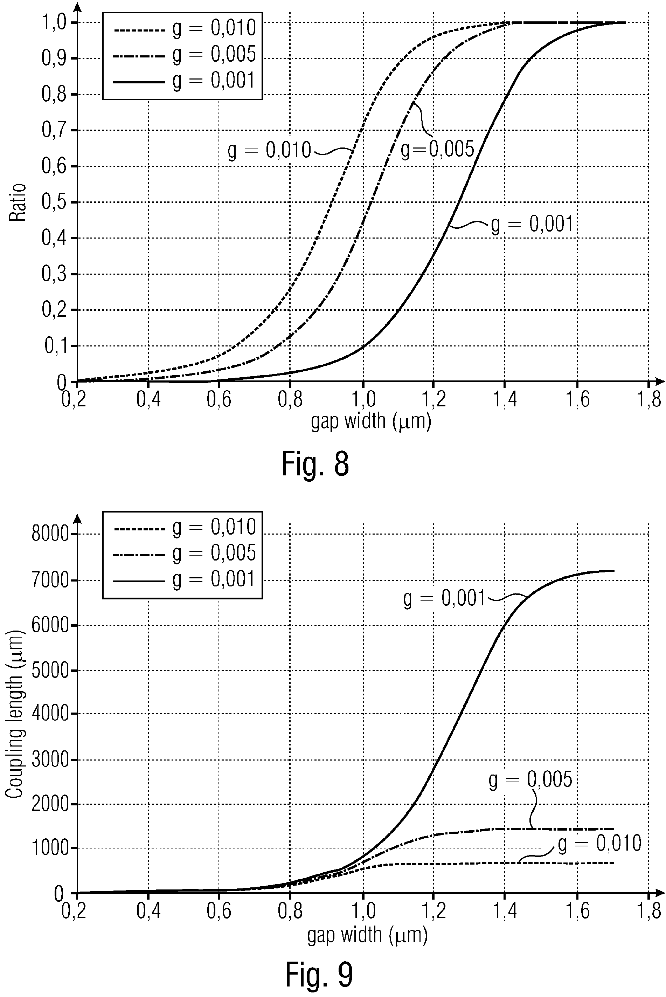

Fig. 8 zeigt ein Verhältnis ($Ratio = \frac{\beta_a - \beta_b}{\beta_e - \beta_o}$) aus den zwei Ausbreitungskonstanten $\beta_a$, $\beta_b$ und den geraden und ungeraden Moden $\beta_e$, $\beta_o$. Das Verhältnis ($Ratio = \frac{\beta_a - \beta_b}{\beta_e - \beta_o}$) wurde für eine konstante Dicke d (d gibt die Breite entlang der z-Richtung eines Wellenleiters a, b an) der mindestens zwei Wellenleiterschichten 10 in Abhängigkeit der mindestens einen Zwischenschicht 20 (2a, Spaltbreite) für verschiedene Gyrotropiewerte g berechnet. Dieses Verhältnis ist in der Fig. 8 gegenüber der der Breite 2a der mindestens einen Zwischenschicht 20 (gap width) für verschiedene Gyrotropiewerte g dargestellt. Fig. 9 zeigt passend zu Fig. 8 eine Darstellung der Kopplungslänge Lc (coupling length), berechnet für verschiedene Gyrotropiewerte g in Abhängigkeit von der Variation Dicke 2a der mindestens einen Zwischenschicht 20 (gap width). Die verschiedene Gyrotropiewerte g in den Figs. 8 und 9 betragen g=0,01 und g=0,005 und g=0,001.

Aus Figs. 6 und 8 ist ersichtlich, dass das Verhältnis ($Ratio = \frac{\beta_a - \beta_b}{\beta_e - \beta_o}$) für alle Gyrotropiewerte g zwischen 0 und 1 variiert. Für eine bestimmte Zwischenschichtbreite 2a erreicht diese Größe 0,707107, was die Breite ist, bei der ein vollständiger Leistungsaustausch zwischen Wellenleiter a und b stattfindet.

Aus Figs. 7 und 9 ist ersichtlich, dass die Größe Lc mit zunehmender Zwischenbreite 2a für alle Gyrotropiewerte zunimmt. Betrachtet man einen einzelnen Gyrotropiefall, ist folgendes zu bemerken: Wenn die Breite 2a der Zwischenschicht einen bestimmten Wert erreicht, bei dem das berechnete Verhältnis 0,707107 beträgt, und wenn die optischen Eingangsmoden, d.h. die optischen TM-Moden, welche in eine Wellenleiterschicht 10 eindringt, eine Distanz Lc zurücklegen, findet ein vollständiger Leistungsaustausch zwischen den Wellenleitern a und b statt.

Es konnten folgende Werte berechnet werden: Für g=0.1 gegen Lc= 50.7$\mu$m
Für g=0.05 gegen Lc=101.4$\mu$m
Für g=0.01 gegen Lc=506.9$\mu$m
Für g=0.005 gegen Lc=1013.75$\mu$m
Für g=0.001 gegen Lc=5063.45$\mu$m)
Den Figs. 6 bis 9 kann also entnommen werden, dass die Kopplungslänge von etwa Lc=50$\mu$m für g=0.1 über Lc= 500$\mu$m für g=0.01 bis nach Lc=5000$\mu$m für g=0.001 reicht.

Eine bevorzugte Dicke d einer der mindestens zwei Wellenleitschichten 10 liegt zwischen 0,1 $\mu$m und 4 $\mu$m, insbesondere im zwei-Dimensionalen (2D) als auch im drei-Dimensionalen (3D). Die bevorzugte Dicke d einer der mindestens zwei Wellenleitschichten 10 hängt beispielsweise von der Wellenlänge ab, bei welcher die mehrlagige Signalleitstruktur 100 betrieben wird. Die bevorzugte Dicke d einer der mindestens zwei Wellenleitschichten 10 hängt beispielsweise auch von dem in den mindestens zwei Wellenleitschichten 10 verwendeten Materialien ab. Bevorzugt werden Einzel-Moden Wellenleitschichten 10 verwendet. Bei Einzel-Moden Wellenleitschichten 10 konzentriert sich eine einzelne Mode in der entsprechenden Wellenleitschicht 10, sofern ein elektromagnetisches Signal in die entsprechende Wellenleitschicht 10 übertragen wird.

Eine Dicke D des MO-Materials in Form der mindestens zwei Abdeckschichten 30 oder eine Dicke 2a des MO-Materials in Form der mindestens einen Zwischenschicht 20 kann von der benutzten Abscheidungstechnik abhängen. Eine Dicke kann hierbei zwischen 50 nm und 500 nm liegen.

Vorliegend wird mit dem Begriff Dicke 2a, d oder D eine Dicke im drei-Dimensionalen Verstanden. Der Begriff Dicke 2a, d oder D eine Dicke kann auch als Durchmesser entlang der z-Achse verstanden werden. In den gezeigten Figs. ist die Dicke 2a, d oder D jedoch nur zwei-dimensional dargestellt.

Bevorzugt verlaufen die mindestens zwei Wellenleiterschichten 10 entlang der Erstreckungsrichtung parallel zueinander. Vorliegend ist "parallel zueinander" im Sinne der Herstellungsmöglichkeit möglichst parallel zueinander ausgerichteter Wellenleiterschichten 10 zu verstehen. Herstellungsbedingte Fabrikationsfehler der mindestens zwei Wellenleiterschichten 10 können daher auch als "parallel zueinander" verstanden werden.

Eine Dicke 2a der mindestens einen Zwischenschicht 20 liegt zwischen 0, 01 μm und 10 μm liegt. Die Dicke 2a der mindestens einen Zwischenschicht 20 hängt bei jeder der drei beschriebenen Konfigurationen vom Gyrotropiewert g des verwendeten MO-Materials ab, sofern ein MO-Mateial für die mindestens einen Zwischenschicht 20 verwendet wird. In den Figs. 7 und 9 beispielsweise liegt die Dicke 2a der mindestens einen Zwischenschicht 20 bei 2a=0.6μm für g=0.1 oder 2a= 0.95μm für g=0.01 oder 2a=1.3μm für g=0.001. In den Figs. 6 bis 9 bezeichnet die größe "gap width" (deutsch Lückenbreite) auf der x-Achse also die Dicke 2a der mindestens einen Zwischenschicht 20.

Die mindestens einen Zwischenschicht 20 kann auch durch eine Luftschicht oder SiOz gegeben sein. Luft ist jedoch kein MO-Material. Mit anderen Worten Luft weist keinen Gyrotropiewert g auf. Die mindestens eine Zwischenschicht 20 kann bei Verwendung der in Fig. 2 dargestellten Konfiguration auch durch eine Luftschicht oder SiO2 oder Epoxidharz bereitgestellt werden.

Insbesondere überschreitet die mindestens eine Zwischenschicht 20 eine Dicke 2a von 100 μm nicht. Der Wert von 2a=100μm kann als Maximalwert der Dicke 2a der mindestens einen Zwischenschicht 20 verstanden werden. Oberhalb eines solchen Wertes treten gekoppelte optische Moden auf. Der Wert von 2a=0,01 μm kann als Minimalwert der Dicke 2a der mindestens einen Zwischenschicht 20 verstanden werden. Insbesondere kann der Minimalwert irgendeine Dicke 2a größer null sein.

Eine Dicke D einer der Abdeckschichten 30 liegt zwischen 0,0 μm und 50 μm, insbesondere bei einem Chip, oder zwischen 0,0μm bis unendlich, insbesondere wenn die mehrlagige Signalleitstruktur 100 nicht in einem Chip eingebaut ist. Die mindestens zwei Abdeckschicthen 30 können auch als Luftschicht ausgebildet sein. In diesem Fall kann die Dicke D unendlich sein. Bei einer dielektrischen Abdeckschicht 30 liegt die Dicke D bei einem Minimalwert größer null, beispielsweise D=0,01 μm, bis zu einem Marimalwert von D=50μm. Insbesondere erstreckt sich das evaneszente, also abklingende, Feld einer entsprechenden Mode nicht mehr als auf einer Länge von 5μm in die dielektrische Abdeckschicht 30.

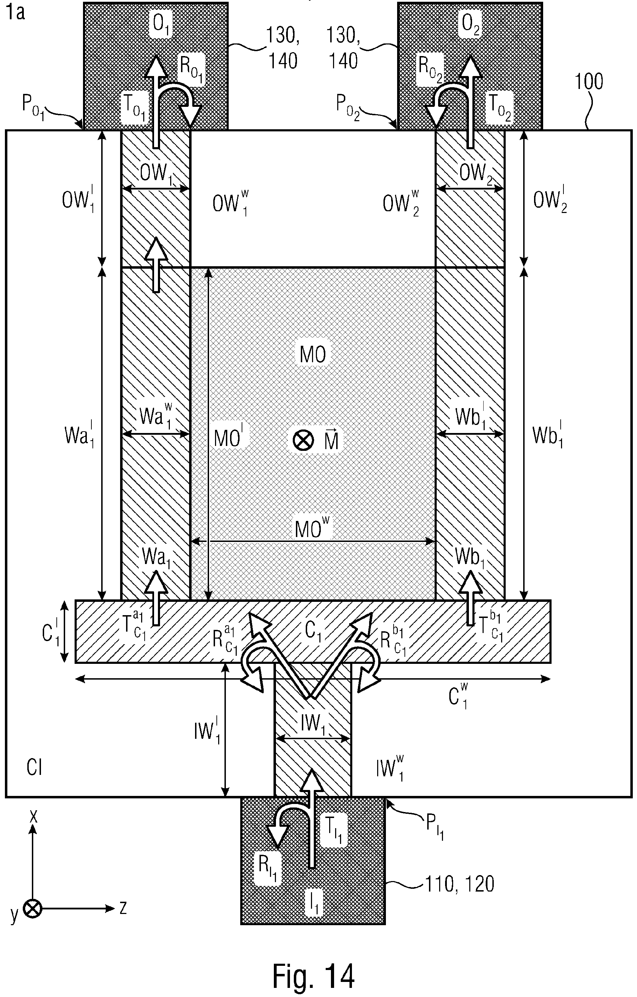

Bevorzugt umfasst die mehrlagige Signalleitstruktur 100 mindestens einen Eingangsport 120 zum Einleiten des elektromagnetischen Signals und mindestens einen Ausgangsport 140 zum Ausleiten eines Ausgangssignals, wobei der Eingangsport 120 zum Einleiten gekoppelter Moden des elektromagnetischen Signals in die mindestens zwei Wellenleiterschichten 10 ausgebildet ist und der mindestens eine Ausgangsport 140 zum erneuten Koppeln der in den mindestens zwei Wellenleiterschichten 10 entlang der Erstreckungsrichtung entkoppelten Moden ausgebildet ist. Der mindestens eine Eingangsport 120 und der mindestens eine Ausgangsport 140 sind beispielsweise in Figs. 14 bis 20 gezeigt.

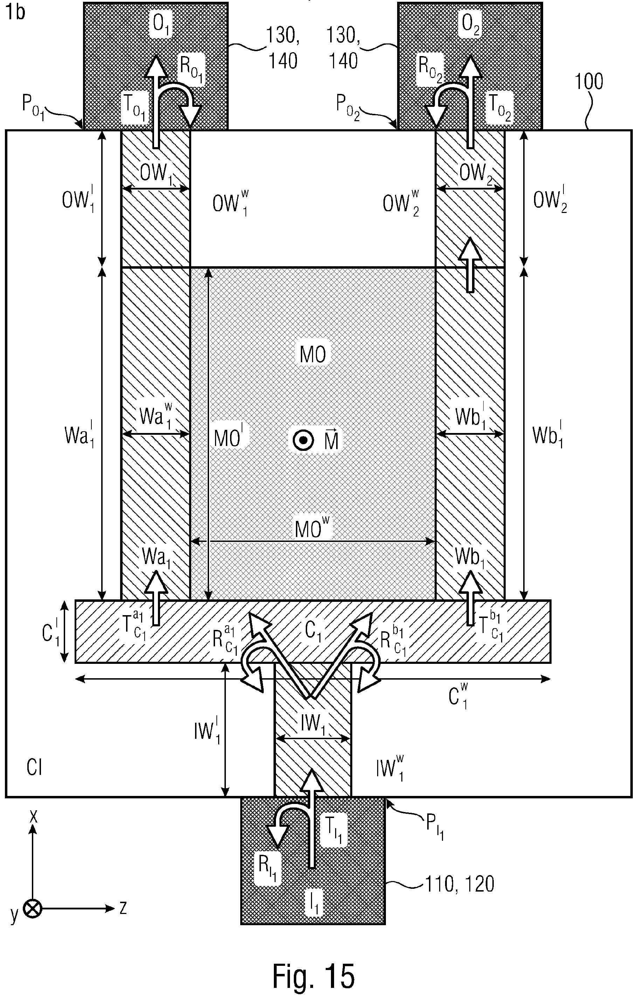

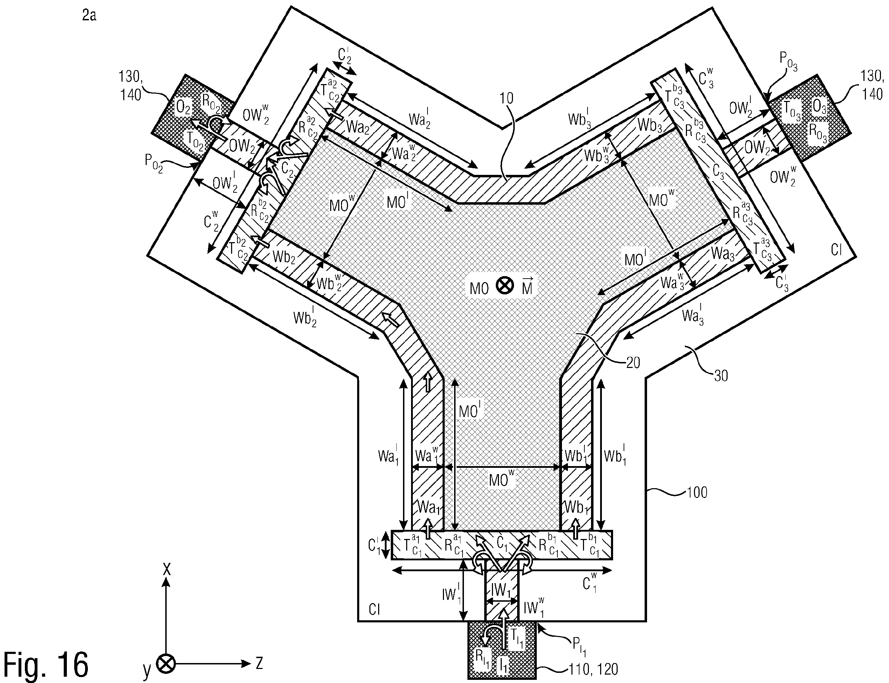

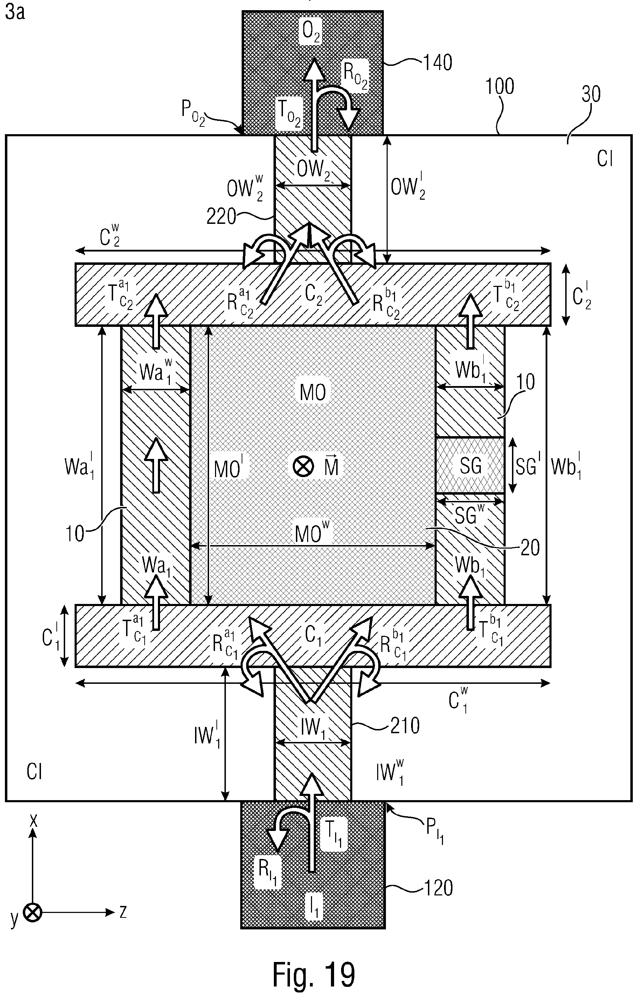

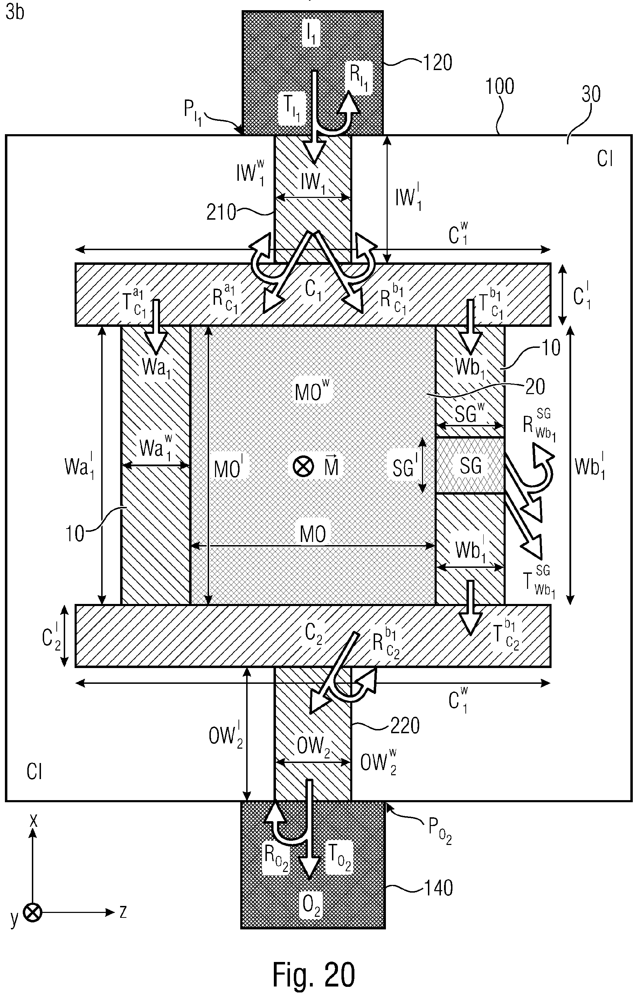

Die mehrlagige Signalleitstruktur 100 kann durch ihren Aufbau dazu ausgebildet sein, eine Isolierung für, insbesondere optische, TM-Moden einer in die mindestens zwei Wellenleiterschichten 10 eingebrachten elektromagnetischen Welle zu schaffen (wie beispielsweise in Figs. 19 und 20 dargestellt) und/oder die, insbesondere optische, TM-Moden in den mindestens zwei Wellenleiterschichten 10 in eine vorgegebene Richtung ausbreiten zu lassen (siehe Fig. 19) und in der zur vorgegebenen Richtung entgegengesetzten Richtung eine Ausbreitung zu verhindern (wie beispielsweise in Figs. 14 und 15 dargestellt) und/oder die, insbesondere optische, TM- Moden in den mindestens zwei Wellenleiterschichten 10 zirkulieren zu lassen (wie beispielsweise in Figs 16 bis 18 dargestellt). Mit dem Begriff Aufbau ist vorliegend ein geometrischer und physikalischer Aufbau gemeint. AN dieser Stelle sei bemerkt, dass in 2D, nur TM- Moden dieses Phänomen zeigen, während in 3D TM- und TE-Moden diese Phänomen zeigen.

In 2D sind die Schalt-, Zirkulations- und Isolatoreffekte bei Verwendung der optischen TM-Moden vorhanden. Im 3D-Modus hingegen kann der Betriebsmodus je nach Dicke der MO-Schicht und der wellenleitenden Schichten in y- Richtung auch den optischen TE-Modus umfassen. In 3D hängen die TE- und TM-Moden, die sich in den mindestens zwei Wellenleiterschichten 10 ausbreiten, von der geometrischen Konfiguration der mehrschichtigen Signalleitungsstruktur 100 ab. Dies bedeutet: Wenn das MO-Material in y-Richtung eine geringe Dicke aufweist, dann ist die Funktionalität in der TE-Mode besser entwickelt als in der TM-Mode. Wenn das MO-Material in y-Richtung eine ausreichende Dicke aufweist, ist die Funktionalität in der TM-Mode besser entwickelt als in der TE-Mode.

Die Begriffe geringe Dicke und ausreichende Dicke sind vorliegend wie folgt zu verstehen. In 3D hängt die Funktionalität der mehrlagigen Signalleitstruktur 100 von dem verwendeten MO-Material ab. Manche Zulieferer können beispielsweise MO-Material mit einer Dicke entlang der Y-Achse von weniger als 100nm abscheiden. Bei einer solchen Dicke (geringen Dicke) entlang der y-Achse arbeitet die Signalleitstruktur 100 besser mit TE-Moden. Andere Zulieferer können vom MO-Material entlang der Y-Achse 500nm abscheiden. Bei einer solchen Dicke (ausreichenden Dicke) entlang der y-Achse arbeitet die Signalleitstruktur 100 besser mit TM-Moden. Zusammenfassen ist festzustellen, dass abhängige von der Dicke des MO-Materials entlang der y-Achse, kann bevorzugt eine TE-Mode oder eine TM-Mode genutzt werden, um ein Schalten oder ein isolieren zu bewirken.

Das vorgeschlagene Design der mehrlagige Signalleitstruktur 100 kann sowohl für TE-Moden als auch für TM- Moden in einem Isolator oder in einem Schalter oder in einem Zirkulator verwendet werden. Wenn es notwendig ist, können Polarisationskonverter, welche vor oder nach der entsprechenden Komponenten positioniert sind, genutzt werden, um das elektromagnetische Signal entsprechend in ein gewünschtes Signal zu konvertieren. Bevorzugt kann die mehrlagige Signalleitstruktur 100 als ein Schalter (siehe Figs. 14 und 15), oder als ein Zirkulator (Figs. 16 bis 18 oder als ein Isolator ausgebildet ist.

Eine Multiport-Umschaltung kann durchgeführt werden, indem mindestens zwei mehrschichtige Signalleitungsstrukturen 100 parallel in der Z-Richtung gestapelt werden. Um den Design-Footprint zu reduzieren, könnte auch das Stapeln solcher Signalleitungsstrukturen 100 in der y-Richtung eine Möglichkeit sein, diese auszunutzen. Ein solches Gerät könnte beispielsweise in Rechenzentren auf großes Interesse stoßen. Gestapelte mehrlagige Signalleitstrukturen 100 sind in den beigefügten Figuren nicht gezeigt.

Das MO-Material kann teilweise oder vollständig geätzt sein, um Platz für ein Rippenwellenleiterformat und/oder ein Stegwellenleiterformat bereitzustellen Granat-MO-Materialien gelten als harte Materialien. Es ist eine heikle Arbeit, vollständig bis auf das Substrat zu ätzen, um eine wellenleitende Struktur zu erzeugen. Aus diesem Grund könnten anstelle von Stegwellenleitern auch Rippenwellenleiterkonstruktionen eine mögliche Lösung sein. In der Rippenkonfiguration wirkt das TMOKE auf die gleiche Weise auf die gekoppelten optischen geraden und ungeraden Moden und verändert das Intensitätsprofil des Magnetfelds. Stegwellenleiter sind rechteckige Wellenleiter. Rippenwellenleiter sind Rechteckwellenleiter mit einer zusätzlichen Schicht aus dem wellenleitenden Material unter dem Wellenleiter.

Eine einzige Wellenleiterschicht 10 umfasst beispielsweise Silizium und/oder Siliziumnitrid und/oder Siliziumdioxid und/oder ein Polymer und/oder Sol-Gel. Eine einzige Wellenleiterschicht 10 kann beispielsweise aus nur einem der genannten Stoffe bestehen. Eine einzige Wellenleiterschicht 10 kann als Heterostruktur aber auch aus mehreren der genannten Stoffe bestehen oder mehrere der genannte Stoffe umfassen.

Das MO-Material kann Granat oder dotiertes Granat oder dotiertes Siliziumdioxid oder Sol-Gel oder ferromagnetisches Material umfassen oder aus diesen bestehen. Jede Schicht 20 und/oder 30 umfasst ein oder besteht jeweils aus einem der genannten Materialien. Insbesondere bestehen oder umfassen die mindestens zwei Abdeckschichten 30 aus demselben bzw. dasselbe MO-Material. Die Mindestens zwei Abdeckschichten 30 können ein MO-Material mit unterschiedlichen, insbesondere entgegengesetzten, Magnetisierungsrichtungen umfassen oder aus dem MO-Material mit unterschiedlichen, insbesondere entgegengesetzten, Magnetisierungsrichtungen bestehen, als die mindestens eine Zwischenschicht 20 mit der Maßgabe, dass die aufgebrachte äußere Magnetisierung in den beiden Bereichen entgegengesetzt ausgerichtet ist. Beispielsweise gemäß Figs. 3a und 3b können das MO-Material MO1 und dam MO-Material MO2 aus demselben MO-Material bestehen oder MO1 umfasst ein anderes MO-Materil als MO2. Jedenfalls sollte das externe Magnetfeld in MO1 und MO2 in beiden Fällen zueinander entgegengesetzt sein.

Eine Abdeckschicht 30 kann Siliziumdioxid, SiOz, und/oder Luft und/oder poly methyl methacrylat, PMMA und/oder PVA und/oder SU-8 umfasst oder aus diesen bestehen. Eine einzige Abdeckschicht 30 kann beispielsweise aus nur einem der genannten Stoffe bestehen. Eine einzige Abdeckschicht 30 kann als Heterostruktur aber auch aus mehreren der genannten Stoffe bestehen oder mehrere der genannte Stoffe umfassen. SU-8 ist ein photoresistes Material auf Epoxidbasis. Der Name steht nicht für etwas Bestimmtes, sondern ist eine Produktbezeichnung des Herstellers MicroChem, der dieses Material entwickelt hat.

Bevorzugt ist die mehrlagige Signalleitstruktur 100 zwischen einer Entkopplungsstruktur 110, um ein Eingangssignal an einem Eingang der mehrlagigen Signalleitstruktur 100 in amplitudengleiche Signale aufzuteilen, und einer Kopplungsstruktur 130, um ein Ausgangssignal an einem Ausgang der mehrlagige Signalleitstruktur 100 wieder zu koppeln, angeordnet ist. Die Entkopplungsstruktur 110 kann den Eingangsport 120 umfassen. Die Entkopplungsstruktur 110 umfasst einen Verteiler, welcher es ermöglicht, das Eingangssignal in amplitudengleiche Signale aufzuteilen. Als Verteiler für die Entkopplungsstruktur eignen sich beispielsweise ein Y-Anschluss (englisch: Y-junction) oder ein Mehrmoden-Interferenz-Koppler (MMI) etc. Die Kopplungsstruktur 130 umfasst ebenfalls einen Verteiler, welcher es ermöglicht, das Ausgangssignal, welches entkoppelte Moden der mehrlagige Signalleitstruktur 100 umfasst, wieder zu koppeln. Als Verteiler für die Kopplungsstruktur 130 eignen sich beispielsweise ein Y-Anschluss (englisch: Y-junction) oder ein Mehrmoden-Interferenz-Koppler (MMI) etc.

Für gewöhnlich verfolgt das Eingangssignal folgenden Weg in der Signalleitstruktur 110:

1) Bei einem Schalter oder Zirkulator: vom Eingangsport 210, $P_{I1}$ zum Verteiler (MMI, Y-Anschluss...), danach Rücklegen einer einfachen Kopplungslänge Lc in den Wellenleitschichten 10, und anschließendes Ausgeben eines Ausgangssignal an den Ausgangsports 220, O1, O2

2) Bei einem Isolator: vom Eingangsport 210, $P_{I1}$ zum Verteiler (MMI, Y-Anschluss...), danach Rücklegen der zweifachen Kopplungslänge 2Lc in den Wellenleitschichten 10, danach zum Koppler (inverser MMI, inverserY-Anschluss, ...) und anschließendes Ausgeben eines Ausgangssignal an den Ausgangsport 220, O1, O2

Die Entkopplungsstruktur 110 und die Kopplungsstruktur 130 können jeweils als ein Mehrmoden-Interferenz-Koppler (MMI) oder als ein Y-Anschluss (Y-junction) oder als ein Baumkoppler (Englisch: tree coupler) oder als ein Sternkoppler oder als ein Richtkoppler ausgebildet sein. Hierbei können der Entkopplungsstruktur 110 und der Kopplungsstruktur 130 jeweils beide von derselben Art sein, d.h. jeweils ein Mehrmoden-Interferenz-Koppler (MMI) oder ein Y-Anschluss (Y-junction) oder ein Baumkoppler (Englisch: tree coupler) oder ein Sternkoppler oder ein Richtkoppler. Die Entkopplungsstruktur 110 und die Kopplungsstruktur 130 können aber auch unterschiedlicher Art sein. Beispielsweise könnte die Entkopplungsstruktur 110 Mehrmoden-Interferenz-Koppler (MMI) und die Kopplungsstruktur 130 Richtkoppler sein. Jede Kombination aus den genannten Entkopplungs-/Kopplungsstrukturen ist möglich.

Bevorzugt umfasst die Entkopplungsstruktur 110 und die Kopplungsstruktur 130 einen adiabatischen Koppler $C_1$ umfasst, welcher derart ausgelegt ist, dass Rückwärtsreflexionen vermieden werden. Adiabatische Koppler $C_1$ sind in den Figs. 14 bis 20 gezeigt. Ein Betriebswellenlängenbereich adiabatischer Koppler ist bekanntermaßen sehr groß, was bedeutet, dass sie entlang eines großen Wellenlängenspektrums optimiert funktionieren könnten, wodurch sie für Anwendungszwecke geeignet sind

Vorliegend bedeutet die Nomenklatur $R_{C_1}^{a_1,b_1}$, dass der Koppler (egal ob Kombinierer oder Verteiler) Rückwärtreflektionen aufweisen können, die von beiden Armen des Kopples ausgehen können. Das R steh daher für die Rückwärtreflektion, C1 für den ersten Koppler und a1 und b1 stehen für die Wellenleiter. Die Nomenklatur ist auch auf $R_{C_1}^{a_1,b_1}$ anwendbar, wobei T für den Transfer der Leistung steht.

Bevorzugt ist eine Wellenleiterschicht 10 als sich entlang der Erstreckungsrichtung, insbesondere entlang der x-Achse, gerader verlaufender Wellenleiter oder als gebogener WellenWellenleiter oder als Schlitzwellenleiter oder als SWG-Wellenleiter oder als PhC-Wellenleiter oder als Hybrid-Wellenleiter ausgebildet.

Nachfolgend wird die Theorie hinter der vorgeschlagenen Erfindung betrachtet. Aus Gründen der Einfachheit und ohne Beschränkung der Allgemeinheit werden nachfolgend nur fünf Schichten betrachtet. Die zuvor beschriebene mehrlagige Signalleitstruktur 100 kann fünf Schichten oder mehr als fünf Schichten umfassen.

Jede der hierin beschriebenen Konfigurationen führt ähnlichen bzw. den gleichen Ergebnissen.

Die physikalischen Phänomene, die sich aus einer solchen Geometrie ergeben, können wie folgt erklärt werden: In herkömmlichen gekoppelten Wellenleitern (ohne MO-Materialien oder -Effekte) existieren für gewöhnlich gerade und ungerade gekoppelte Moden, die keine Leistung austauschen, wenn sie sich gleichzeitig bewegen. Bei Anwendung einer externen Magnetisierung in TMOKE (Transversaler Magneto-Optischer Kerr-Effekt) auf die fünfschichtige Signalleitstruktur, welche auch als Heterostruktur bezeichnet werden könnte, verlieren gekoppelte gerade und ungerade optische Moden ihre konventionellen elektromagnetischen symmetrischen/anti-symmetrischen Intensitätsprofile und werden asymmetrisch bzw. anti-asymmetrisch.

Aufgrund einer unausgewogenen Intensitätsverteilung konzentriert sich, wenn sich die gerade Mode im Wellenleiter a konzentriert, die ungerade Mode dagegen im Wellenleiter b. Außerdem sollten sich diese Moden über eine als "Kopplungslänge" bezeichnete Entfernung ausbreiten, um sich zu entkoppeln, so dass am Ende nur eine von ihnen übrig bleibt, deren Leistung ausschließlich in einem der, insbesondere zueinander parallelen, Wellenleitern konzentriert ist.

Die Schalter-Komponente (wie beispielsweise in den Figs. 14 und 15 dargestellt) spielt eine entscheidende Rolle bei der Weiterleitung und Verwaltung von Daten in optischen Netzen und ermöglicht dadurch ein effizientes und schnelles Umschalten von optischen Signalen zwischen verschiedenen Pfaden. Sie werden in der Telekommunikation, in Datenzentren usw. eingesetzt. Hier können Schalter mit einem Wellenleiter als Eingangsport entworfen werden, der die, insbesondere optische, TM-Mode (Grundmoden oder optische Moden höherer Ordnung) beherbergt. Ein zweites Element, ein (Ent-)Koppler: Y-Verteiler, MMI-Koppler usw. (siehe oben), teilt den Eingangswellenleiter in zwei, insbesondere parallele, Wellenleiter mit dazwischen liegendem MO-Material. An diesem Punkt gibt es im System gekoppelte gerade und ungerade Moden, die sich am Ende der Struktur entkoppeln. Je nach Ausrichtung der externen Magnetisierung wird das Licht in einem der Wellenleiter, a oder b, konzentriert. Bislang ermöglicht die mehrlagige, insbesondere fünfschichtige, Signalleitstruktur eine vollständige Kontrolle über die Lichtausbreitungsrichtung durch Manipulation der Ausrichtung der externen Magnetisierung.

Es ist erwähnenswert, dass ein zusätzlicher Freiheitsgrad die Phase der optischen Mode in den Wellenleitern a und b ist. Der gerade-asymmetrische Mode hat Modalkeulen, die zueinander gleichphasig sind, wobei die Keule höherer Intensität im Wellenleiter a konzentriert ist. Die ungerade-anti-asymmetrische Mode hat phasenverschobene Modalkeu-len ($\pi$), wobei die Keule mit höherer Intensität im Wellenleiter b konzentriert ist. Das heißt, wenn die Eingangsmoden in Phase sind (bei Anregung durch die optische TM-Grundmode), erscheint am Ausgangsport die gerade asymmetrische Mode im Wellenleiter a. Wenn andererseits die Eingangsmoden phasenverschoben sind (bei Anregung durch eine optische TM-Mode zweiter Ordnung), erscheint am Ausgangsport die ungerade-anti-asymmetrische Mode im Wellenleiter b. Somit kann neben der Nutzung der externen Magnetfeldrichtung zum Schalten der Lichtführung auch die Anfangsphase genutzt werden. In beiden Fällen sollten sich diese Moden zum Entkoppeln über eine Distanz ausbreiten, die als "Kopplungslänge" $L_c$ hierin beschrieben ist, so dass am Ende nur eine Mode von ihnen übrigbleibt, dessen Leistung ausschließlich in einem der parallelen Wellenleiter konzentriert ist.

Fig. 14 zeigt eine Draufsicht auf einen dielektrischen MO-Schalter, bei dem die Richtung des angelegten externen Magnetfeldes nach innen gerichtet ist. Fig. 15 zeigt eine Draufsicht auf einen dielektrischen MO-Schalter, bei dem die Magnetisierungsrichtung nach außen gerichtet ist. Mit nach Innen bzw. nach Außen ist eine Richtung in das MO Material bzw. aus dem MO Material gemeint, in welcher die durch das externe Magnetfeld resultierende Magnetisierung gerichtet ist. Wenn die Richtung des externen Magnetfeldes umgekehrt wird, so kehrt sich auch die Magnetisierung um.

Dies hat zur Folge, dass sich das Licht dann im Wellenleiter b statt im Wellenleiter a ausbreitet. Die Schalter aus den Figs. 14 und 15 weisen jeweils einen Eingangsport 110 und zwei Ausgangsports 130 auf. Außerdem weisen die Schalter aus den Figs. 14 und 15 weisen jeweils ein Entkopplungsstruktur 120 und zwei Kopplungsstrukturen 140 auf. Ferner Weisen die Schalter aus den Figs. 14 und 15 jeweils einen adiabatischen Koppler C1 auf. Die Bezugzeichen der mehrlagigen Signalleitstruktur entsprechenden Bezugzeichen aus den Figs. 1 bis 3, was an dieser Stelle nicht nochmal widerholt wird. Zu bemerken ist, dass bei dem Schalter aus den Figs. 14 und 15 zwischen den zwei Signalleitschichten 10 teilweise eine Abdeckschicht 30 angeordnet ist, und zwar da, wo zwischen den zwei Signalleitschichten kein MO-Material angeordnet ist.

Ein Zirkulator, wie er beispielsweise in Figs. 16, 17 und 18 dargestellt ist, ähnelt in seiner Funktionalität einem Schalter, unterscheidet sich jedoch durch Unterbringung einer größeren Anzahl von Anschlüssen. Die erweiterte Kapazität eines Zirkulators ermöglicht die effiziente Verwaltung mehrerer Verbindungen mit erhöhter Vielseitigkeit. Er kann beispielsweise durch die Platzierung von drei Schaltern in Winkeln von 120° zueinander entworfen werden. Das Beschrieben für die Schalter aus Figs. 14 und 15 gilt daher auch für die Zirkulatoren aus Figs 16, 17 und 18 und wird nicht nochmal wiederholt.

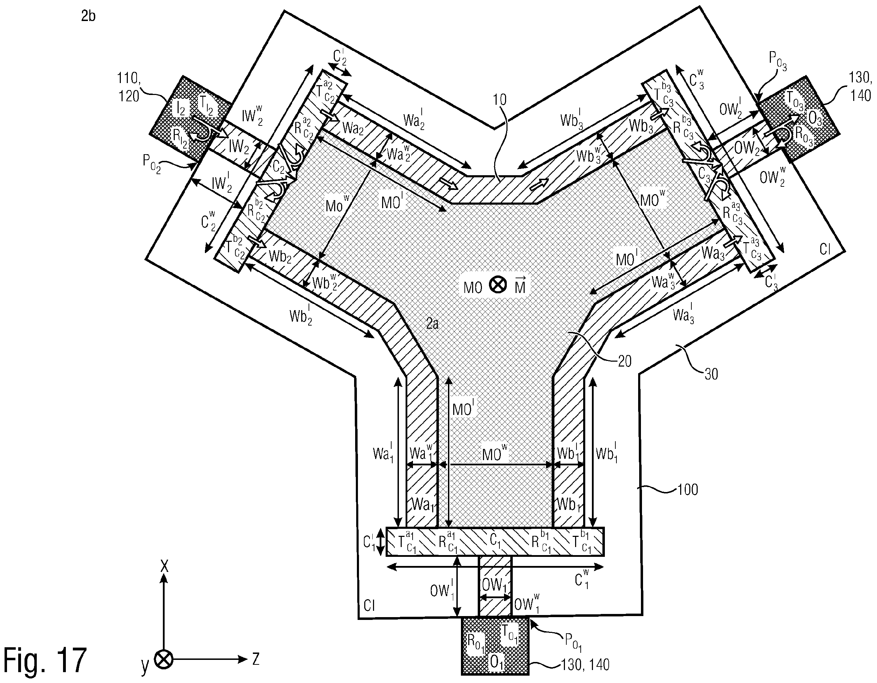

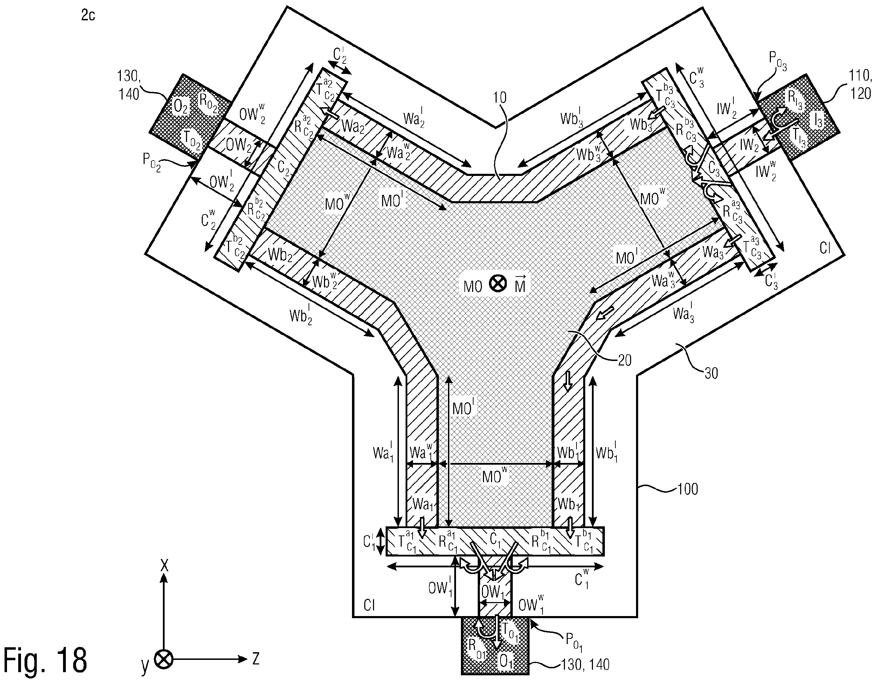

Fig. 16 zeigt eine Draufsicht auf einen dielektrischem MO-Zirkulator mit Lichteintritt durch einen ersten Port $I_1$. Fig. 17 zeigt eine Draufsicht auf einen dielektrischem MO-Zirkulator mit Lichteintritt durch einen zweiten Port $I_2$. Fig. 18 zeigt eine Draufsicht auf einen dielektrischem MO-Zirkulator mit Lichteintritt durch einen dritten Port $I_3$.

Wenn die Richtung des Eingangslichts bzw. des Eingangssignals von vorwärts nach rückwärts umgeschaltet wird, wird das Licht im Wellenleiter $b$ konzentriert, als ob die Ausrichtung der externen Magnetisierung umgeschaltet würde. Dieses Konzept ermöglicht den Aufbau von optischen Isolatoren.

Optische Isolatoren (wie beispielsweise in den Figs. 19 und 20 gezeigt) wirken wie eine Einbahntstrasse für Licht, das eine Signalbewegung vom Eingang zum Ausgang erlaubt, aber verhindert, dass Licht in die Quelle, d.h. in entgegengesetzte Richtung, zurückreflektiert wird. Optische Isolatoren sind in verschiedenen Anwendungen unverzichtbar, z. B. in Lasersystemen, faseroptischen Kommunikationsnetzen und optischen Instrumenten. Indem sie die Signalintegrität sicherstellen und eine Destabilisierung des Lasers verhindern, tragen sie zur allgemeinen Zuverlässigkeit und Leistung optischer Systeme bei.

Fig. 19 zeigt eine Draufsicht auf einen dielektrische MO-Isolator mit Licht, das sich in Vorwärtsausbreitungssinn bewegt, d.h von null nach +x. Fig. 20 zeigt Draufsicht auf einen dielektrische MO-Isolator mit Licht, das sich in Rückwärtsausbreitungssinn bewegt, d.h. von -x nach null.

Für die Entwicklung eines Isolators werden ein Eingangswellenleiter 210, ein (Ent-)Koppler C1, eine mehrlagige, insbesondere fünfschichtige, Signalleitstruktur 100, ein Koppler C2 und ein Ausgangswellenleiter 220. Die optische TM-Mode wird entkoppelt und wieder an den Ausgang zurückgekoppelt. Bei diesem Entwurf wird das Eingangslicht (optische TM-Mode) in Vorwärtsrichtung auf den Wellenleiter a, insbesondere einem Wellenleiter $a$, und in Rückwärtsrichtung auf den Wellenleiter b, insbesondere einem Wellenleiter b begrenzt. Schließlich muss die gesammelte Leistung am Eingangs- und am Ausgangsport 110, 130 ungleich sein, um nicht reziprok zu wirken. Um dies zu erreichen, reicht die Verwendung eines beliebigen Elements aus, das eine Störung erzeugt, so dass es keine Rückreflexionen verursacht. Vorgeschlagen wird ein strahlender SWG-Wellenleiter (SWG = Sub-Wavelength Grating). Der SWG-Wellenleiter wird vorzugsweise in der Mitte des Wellenleiters b platziert, um das Licht nach außen zu beugen. In diesem Zusammenhang können auch Ringresonatoren zur Lichtablenkung eingesetzt werden, die einen vielseitigen Mechanismus zur Ablenkung des Lichts nach hinten bieten.

Wenn der SWG-Wellenleiter mit der richtigen Teilung in Bezug auf den Wellenleiter b und dem richtigen Füllfaktorentworfen ist, arbeitet der SWG-Wellenleiter in einem Strahlungsmodus. Dies bedeutet, dass das Licht außerhalb eines Führungsbereichs SG durch den SWG-Wellenleiter (SG in Figs 19 und 20) gebeugt wird. Wenn der Ringresonator sorgfältig konstruiert ist und die richtigen Abmessungen hat, kann der Ringresonator Licht effizient aus dem Wellenleiter herausleiten.

Bei dieser Anordnung kann das Licht in Vorwärtsrichtung ungestört passieren, während Licht in Rückwärtsrichtung nach außen gestreut wird, was zu einem Ungleichgewicht der an den gegenüberliegenden Eingang- und Ausgangsports 110, 130 gesammelten Leistung führt. Das SWG ist ein Array von Gittern, die geometrische Eigenschaften haben, die sich durch Teilung und Füllfaktor zusammenfassen lassen. Der Ringresonator ist ein Resonator mit hoher Güte, die durch Parameter wie Radius, Umfang, Kopplungskoeffizient definiert wird.

Zusammenfassend lässt sich sagen, dass der MO-Effekt auf die gekoppelten optischen Moden die Auswahl der Lichtausbreitungsrichtung ermöglicht, wodurch Schalter/Zirkulatoren geschaffen werden können. Diese strahlen bei Kombination mit zusätzlichen Elementen wie SWGs, oder Resonatoren das rückwärts laufende Signal nach außen ab und bilden so einen Isolator. Wie jetzt deutlich wird, ist die vorgeschlagene Erfindung eine hocheffiziente Lösung für integrierbare optische Schalter/Zirkulatoren und Isolatoren in PICs. Der Entwurf verspricht eine 100%ige Schaltung/-Zirkulation und/oder Isolation, wenn er zum Einsatz kommt.

Die verschiedenen Elemente, die den Schalter, den Zirkulator und den Isolator bilden, sind von geringer Komplexität. Die Theorie hinter geraden Wellenleitern (Eingang und Ausgang) und Kopplern (regulär oder invers) ist bereits bekannt und klar und wird an dieser Stelle nicht im Detail beschrieben. Das Segment, das die meiste Aufmerksamkeit verdient, ist der Kernbereich, nämlich die mehrlagige Signalleitstruktur 100.

Ein theoretischer Ansatz für sie mehrlagige Signalleitstruktur 100 wird nachfolgend vorgestellt.

**Modalanalyse**

Die für diese Erfindung durchgeführten Arbeiten wurden theoretisch mit Hilfe der Maxwellschen Gleichungen durchgeführt und durch FDTD- und FEM-Simulationen (FDTD aus dem Englisch für Finite-Differenzen-Methode im Zeitbereich und FEM für Finite Elemente Modulation) unterstützt. Wie bereits ausführlich erörtert wurde, ist die Verwendung von MO-Materialien ein effizienter Weg, die Zeitsymmetrie zu brechen. Fast alle MO-Phänomene sind eine direkte Folge des Zeeman-Effekts.

Der dielektrische Tensor eines solchen MO-Materials kann in der Form [40] dargestellt werden.

$$\varepsilon_d = \begin{pmatrix} \varepsilon_{xx} & \varepsilon_{xy} & \varepsilon_{xz} \\ \varepsilon_{yx} & \varepsilon_{yy} & \varepsilon_{yz} \\ \varepsilon_{zx} & \varepsilon_{zy} & \varepsilon_{zz} \end{pmatrix}$$

Jedes Paar dieser nichtdiagonalen Elemente ist gleich groß und von entgegengesetztem Vorzeichen ($\varepsilon_{xy} = -\varepsilon_{yx}$, $\varepsilon_{xz} = -\varepsilon_{zx}$, $\varepsilon_{yz} = -\varepsilon_{zy}$). In Abwesenheit eines externen Magnetfeldes könnte dieser Tensor als Diagonale geschrieben werden, bei der die drei Elemente gleich zueinander sind ($\varepsilon_{xx} = \varepsilon_{yy} = \varepsilon_{zz}$).

Das Element außerhalb der Diagonale ist gegeben durch:

$$\varepsilon_{xy} = i \cdot g = i \cdot n_{MO} \cdot \lambda \cdot \theta_F / \pi$$

wobei: g der gyrotrope MO-Parameter ist, $\varepsilon_d$ die Dielektrizitätskonstante ist, $\lambda$ die Wellenlänge des Betriebs und $\theta_F$ der zugehörige Faraday-Rotationskoeffizient ist. Der Parameter $g$ ist bei optischer Wellenlänge normalerweise sehr klein (<$10^{-2}$). Wismut-Eisen-Granat (BIG) zum Beispiel hat $g \approx 0.06$ [41]. Mit Bezug zu den Figs 6 bis 9 wird g auch als gyrotropisches Niveau bezeichnet.

Der Einfachheit halber wird in den theoretischen Ableitungen, Analysen und numerischen Simulationen und ohne Verlust an Allgemeinheit angenommen, dass das System eine zweidimensionale Struktur ist, d. h. ohne Feldvariationen in y-Richtung. Es ist zu beachten, dass in der vorliegenden Analyse die Materialpermittivitäten unabhängig von der Frequenz betrachtet werden. Dies stellt keine Einschränkung des vorgeschlagenen Konzepts dar, da die Dispersion der Materialparameter bei Bedarf leicht in den ursprünglichen Entwurf des Systems einbezogen werden kann.

Unter Verwendung der Maxwellschen Gleichungen werden die verallgemeinerten Dispersionsrelationen abgeleitet. Eine Draufsicht der mehrlagigen Signalleitstruktur 100 in Form einer fünfschichtigen Signalleitstruktur ist in Figur 1 dargestellt. Fig. 1 zeigt ein MO-Material mit der Breite/Dicke 2a und zwei, insbesondere dielektrischen, Wellenleitern a und b der Breite d jeweils. Diese Art von Struktur kann die geraden und ungeraden gekoppelten Moden beherbergen. Diese Eigenmoden entstehen durch evaneszente Kopplung zwischen den optischen Moden, die von den einzelnen Wellenleitern a und b unterstützt werden, die sich in x-Richtung ausbreiten.

In einem kartesischen Koordinatensystem können die elektromagnetischen Felder wie folgt dargestellt werden:

$$\vec{E} = \vec{E_0} e^{i(\omega t - \beta x)}$$

$$\vec{H} = \vec{H_0} e^{i(\omega t - \beta x)},$$

wobei $\vec{E_0}$ und $\vec{H_0}$ die Amplitudenvektoren mit komplexwertigen Komponenten sind. $\beta$ ist die Ausbreitungskonstante der sich bewegenden Wellen und entspricht der Komponente des Wellenvektors in Ausbreitungsrichtung und $\omega = 2\pi f$ ist die Winkelfrequenz der einfallenden Welle.

Durch die Wahl geeigneter modaler Feldfunktionen in jedem Bereich des Wellenleiters a, b und die Anwendung der Randbedingungen für das elektromagnetische Feld können die Lösung des modalen Feldes und die charakteristische Gleichung erhalten werden. Die Magnetfeldkomponenten in den fünf betrachteten Schichten können in folgender Form geschrieben werden, wobei 2a für die Dicke der mindestens einen Zwischenschicht 20 und d für die Dichke einer Wellenleitschicht 10 stehen:

$$H_y(z) = \begin{cases} A_1 \exp[-K_1(z-a-d)] & z \geq a+d \\ A_2 \cos[K_2(z-a-d/2)] & a \leq z \leq a+d \\ A_3 \exp[K_3 z] + A_4 \exp[-K_3 z] & -a \leq z \leq a \\ A_5 \cos[K_4(z+a+d/2)] & -a-d \leq z \leq -a \\ A_6 \exp[K_5(z+a+d)] & z \leq -a-d \end{cases}$$

Durch Ersetzen von $H_y$ jeder Schicht in die Wellengleichung kann man den Ausdruck für die Wellenvektoren in jeder Schicht der betrachteten Struktur finden.

$$K_{1,3,5} = \sqrt{(\beta_{e,o}^2 \gamma_{xx}^{1,3,5} - k_0^2)/\gamma_{xx}^{1,3,5}}, \quad K_{2,4} = \sqrt{(k_0^2 - \beta_{e,o}^2 \gamma_{xx}^{2,4})/\gamma_{xx}^{2,4}},$$

wobei:

$$\gamma_{zx}^3 = ig/(n_3^4 - g^2), \gamma_{xx}^3 = n_3^2/(n_3^4 - g^2)$$

$$\gamma_{xx}^{1,5} = 1/n_{1,5}^2, \quad \gamma_{xx}^{2,4} = 1/n_{2,4}^2$$

Wenn schließlich die Kontinuität der elektromagnetischen Felder $E_x$, $H_y$ und $E_z$ an den verschiedenen Grenzen (-a - d, -a, +a, +a + d) angewendet wird, wird die komplexe Dispersionsrelation für diese Welle wie folgt geschrieben:

$$K_2 d = \tan^{-1}\left(\frac{\gamma_{xx}^1 K_1}{\gamma_{xx}^2 K_2}\right)$$
$$+ \tan^{-1}\left(\frac{A_3 \exp[K_3 a]\left(\beta_{e,o}\gamma_{zx}^3 - i\gamma_{xx}^3 K_3\right) + A_4 \exp[-K_3 a]\left(\beta_{e,o}\gamma_{zx}^3 + i\gamma_{xx}^3 K_3\right)}{-i\gamma_{xx}^2 K_2(A_3 \exp[K_3 a] + A_4 \exp[-K_3 a])}\right)$$

wobei:

$$A_3$$
$$= \frac{-2\beta\gamma_{zx}^3 \cosh(2K_3 a)A_4 \pm \sqrt{\left(2\beta_{e,o}\gamma_{zx}^3 \cosh(2K_3 a)A_4\right)^2 - 4\left(\beta_{e,o}\gamma_{zx}^3 - i\gamma_{xx}^3 K_3\right)\left(\beta_{e,o}\gamma_{zx}^3 + i\gamma_{xx}^3 K_3\right)A_4^2}}{2\left(\beta_{e,o}\gamma_{zx}^3 - i\gamma_{xx}^3 K_3\right)}$$

In der zweiten Gleichung entsprechen die beiden Lösungen, die sich aus den "Plus"- und "Minus"-Vorzeichen ergeben, den Ausbreitungskonstanten der geraden und ungeraden Moden $\beta_{e,o}$. Aus dem Verhältnis von $A_3$ zu $A_4$ ist ersichtlich, dass die Amplituden der $H_y(z)$-Komponente, die jeder der gekoppelten Moden entsprechen, $A_2$ und $A_5$ in den Wellenleitern a bzw. b, unterschiedlich sind. Daraus können wir schließen, dass die geraden und ungeraden gekoppelten Moden ihr traditionelles symmetrisches Verhalten verlieren und um die z-Achse asymmetrisch bzw. anti-asymmetrisch werden.

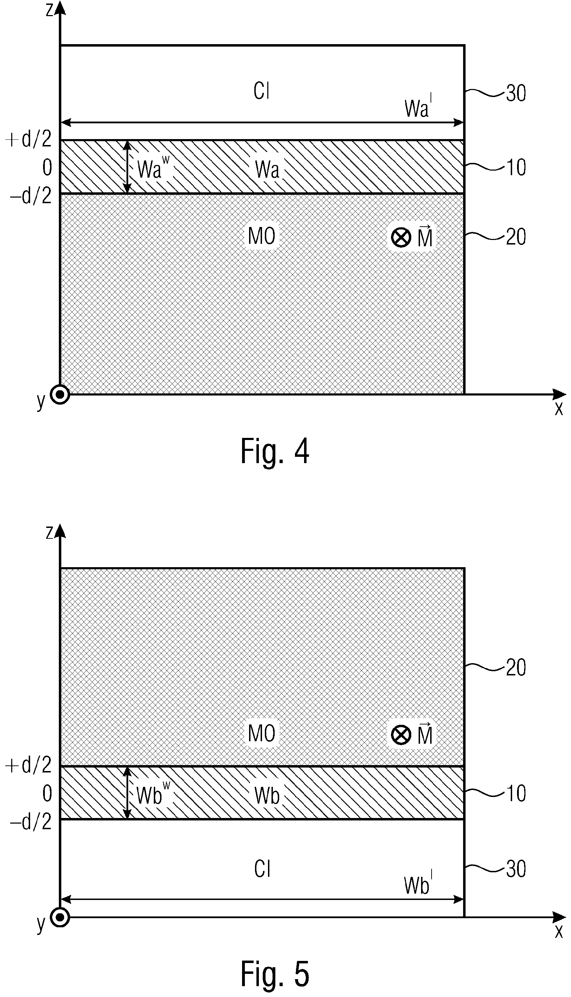

Wenn die Breite der MO-Schicht zu groß wird, kann das System in zwei Bereiche aufgeteilt werden. Die Figuren 4 und 5 zeigen die beiden Unterteilungen.

Fig. 4 zeigt eine Draufsicht auf eine erste Partition der mehrlagigen Signalleitstruktur 100 mit nur einer Wellenleitschicht 10, d.h. Wellenleiter a. Fig. 5 zeigt eine Draufsicht auf eine weitere Partition der mehrlagigen Signalleitstruktur 100 mit nur einer Wellenleitschicht 100, d.h. Wellenleiter b.

Für die dreischichtige Signalleitstruktur in Figur 4 können die Magnetfeldkomponenten im Wellenleiter a in folgender Form geschrieben werden:

$$H_y(z) = \begin{cases} A_1 \exp[-K_1(z-d/2)] & z \geq d/2 \\ A_2 \cos[K_2(z)] & -d/2 \leq z \leq d/2 \\ A_3 \exp[K_3(z+d/2)] & z \leq -d/2 \end{cases}$$

Dispersionsrelation:

$$K_2 d = \tan^{-1}\left(\frac{\gamma_{xx}^3 K_3}{\gamma_{xx}^2 K_2}\right) + \tan^{-1}\left(\frac{\beta_a \gamma_{zx}^1 + i\gamma_{xx}^1 K_1}{i\gamma_{xx}^2 K_2}\right)$$

$\beta_a$ steht für die Ausbreitungskonstante der Grundmode des Wellenleiters a.

Für die dreischichtige Signalleitstruktur 100 in Figur 5 können die Magnetfeldkomponenten im Wellenleiter b in folgender Form geschrieben werden:

$$H_y(z) = \begin{cases} A_1 \exp[-K_1(z - d/2)] & z \geq d/2 \\ A_2 \cos[K_2(z)] & -d/2 \leq z \leq d/2 \\ A_3 \exp[K_3(z + d/2)] & z \leq -d/2 \end{cases}$$

Dispersionsrelation:

$$K_2 d = \tan^{-1}\left(\frac{\gamma_{xx}^1 K_1}{\gamma_{xx}^2 K_2}\right) + \tan^{-1}\left(\frac{\beta_b \gamma_{zx}^3 - i\gamma_{xx}^3 K_3}{-i\gamma_{xx}^2 K_2}\right)$$

$\beta_b$ stellt die Ausbreitungskonstante der Grundmode des Wellenleiters b dar.

Die abgeleiteten Beziehungen zeigen, dass die Ausbreitungskonstanten in beiden Fällen unterschiedlich sind, $\beta_a \neq \beta_b$. Dies ist in der Tat auf das Vorhandensein der MO-Schicht zurückzuführen, was zu einem Bruch der räumlichen Symmetrie führt.

Theorie der gekoppelten Moden in der mehrlagigen, insbesondere fünfschichtigen, Signalleitstruktur

Die CMT (Coupled-Mode Theory; Theorie der gekoppelten Mode) ist nützlich, um die Kopplungsmechanismen in parallelen Wellenleitern zu verstehen. Die CMT geht davon aus, dass die gekoppelten Moden als lineare Kombination der einzelnen Moden in den ungekoppelten Wellenleitern a, b ausgedrückt werden können, und sie beinhaltet die Lösung einer Reihe von Gleichungen zur Bestimmung der Amplituden und Ausbreitungskonstanten der gekoppelten Moden. Die Kopplung zwischen den Moden wird beschrieben durch die Koeffizienten $K_{ab}$ und $K_{ba}$, die die Stärke der Wechselwirkung quantifizieren. Es reicht aus, die Gleichungen aus [42] zu verwenden. Ausgedrückt in einer Matrixform:

$$\begin{pmatrix} P_1(x) \\ P_2(x) \end{pmatrix} = \begin{pmatrix} \cos(\psi x) - i\dfrac{\Delta}{\varphi}\sin(\psi x) & i\dfrac{K_{ab}}{\varphi}\sin(\psi x) \\ i\dfrac{K_{ba}}{\psi}\sin(\psi x) & \cos(\psi x) + i\dfrac{\Delta}{\psi}\sin(\psi x) \end{pmatrix} e^{\frac{i(\beta_a + \beta_b)}{2}x} \begin{pmatrix} P_1(0) \\ P_2(0) \end{pmatrix}$$

Es gibt zwei Eigenwerte für $\beta$: nämlich $\beta_e$ und $\beta_o$ für die geraden ($\beta_e$ wobei e für even steht) und ungeraden Moden ($\beta_o$ wobei o für odd steht):

$$\beta_{e,o} = \frac{\beta_a + \beta_b}{2} \pm \psi$$

$$\Delta = \frac{\beta_a - \beta_b}{2}$$

$$\psi = \sqrt{\Delta^2 + K_{ab}K_{ba}}$$

Die Kopplungslänge kann als Funktion der Ausbreitungskonstanten der geraden und ungeraden Moden geschrieben werden:

$$L_c = \frac{\pi}{\beta_e - \beta_o}$$

Bei Vorhandensein von MO-Material, bei $x = 0$, fällt die optische Leistung auf beide Wellenleiter ein, d.h. $P_1(0) = P_2(0) = 0.5$. Die Leistung an jedem beliebigen Punkt entlang der Ausbreitungsachse (d.h. entlang der Erstreckungsrichtung) kann aus der Matrix extrahiert werden:

$$P_1(x) = 0.5[\cos(\psi x) - i\frac{\Delta}{\psi}\sin(\psi x) + i\frac{K_{ab}}{\psi}\sin(\psi x)]\, e^{\frac{i(\beta_a + \beta_b)}{2}x}$$

$$P_2(x) = 0.5[\cos(\psi x) + i\frac{\Delta}{\psi}\sin(\psi x) + i\frac{K_{ba}}{\varphi}\sin(\psi x)]\, e^{\frac{i(\beta_a + \beta_b)}{2}x}$$

Die maximale Leistungsübertragung zwischen den Wellenleitern a und b erfolgt bei $L_c$, wobei $\psi x = \pi/2$. Wenn angenommen wird, dass die übertragene Leistung vollständig ist, kann das Verhältnis der normierten Leistungsdifferenz folgendermaßen geschrieben werden:

$$Verh\ddot{a}ltnis = \frac{P_2(x)^2 - P_1(x)^2}{P_2(x)^2} = 1$$

Setzt man jeweils den entsprechenden Term ein, und nach Vereinfachung erhält man:

$$Verh\ddot{a}ltnis = \frac{\beta_a - \beta_b}{\beta_e - \beta_o} = 0.707107$$

Das heißt, wenn das *Verhältnis* 0.707107 ist, findet eine vollständige Leistungsübertragung statt. Zur Veranschaulichung des Prinzips wurden die folgenden Werte für Material und geometrische Parameter angenommen.

Die Variablen d und 2a beschrieben die Dicke 2a der Zwischenschicht 20 und die Dicke d einer Wellenleitschicht 10. Die Werte g beschreiben gyrotropische Niveaus. Der Wert $n_{Mantel}$ gibt einen Brechungsindex einer Abdeckschicht 30 an. Der Wert $n_{MO}$ gibt einen Brechungsindex der Zwischenschicht 20 an, welche das im vorliegenden Beispiel das MO-Material umfasst. Der Wert $n_{Wellenleiter}$ gibt einen Brechungsindex einer Wellenleitschicht 10, a, b an. Vorliegend werden sie Begriffe Wellenleiter und Wellenleitschicht synonym zueinander genutzt. Die hier angeführte Ableitung wurde für die erste Konfiguration gemäß Fig. 1 gemacht. Für die zweite und dritte Konfiguration erfolgt die Ableitung in analoger Weise und führt zu ähnlichen Ergebnissen. Insbesondere das Verhältnis und die Kopplungslänge Lc resultieren für diese weiteren Konfigurationen jeweils in derselben Gleichung, welche vorliegend abgeleitet worden sind.

In Tabelle 1 sind Paramter angegeben, welche genutzt wurden, um die gezeigten Graphen aus Figs. 6 bis 9 zu erzeugen. Diese Parameter geben typische Werte für die Abdeckschichten 30, die Wellenleitschichten 10 und der MO-Materialien an.

**Tabelle 1:** Variablen und mögliche Werte der fünfschichtigen Heterostruktur.

| Variable | Wert |
|---|---|
| $n_{Mantel}$ | 1,45 |
| $n_{Wellenleiter}$ | 3,48 |
| $n_{MO}$ | 2,3 |
| g | 0,001, 0,05, 0,01, 0,05, 0.1 |
| 2a | [0,2-1,7] μm |
| d | 0,3 μm |

Mit numerischen Methoden kann man die oben dargestellten Dispersionsrelationen lösen und die Ausbreitungskonstanten $\beta_{a,b}$ und $\beta_{e,o}$ ableiten. Um eine komplizierte Darstellung zu vermeiden, wurden die Ergebnisse in zwei Mengen aufgeteilt, für g, die zwischen [0,1-0,01] und [0,01-0,001] variieren. Diese Ergebnisse sind in den Figs. 6 bis 9 dargestellt..

Den Figs. 6 bis 9 kann also entnommen werden, dass die Kopplungslänge von etwa Lc=50μm für g=0.1 über Lc= 500µm für g=0.01 bis nach Lc=5000µm für g=0.001 reicht. Die Ergebnisse aus Figs. 6 bis 9 zeigen, dass für alle g-Werte das Verhältnis (*Ratio*) mit größer werdender Zwischenschicht 20, welche man auch als Spaltbreiten(gap width) bezeichnen könnte, zunimmt. Für jeden Wert von g erreicht das *Ratio* bei einer bestimmten Breite den Wert 0,707107 (siehe Figs 7 und 9). Bei größeren Spaltbreiten, wachsen $\beta_{e,o}$ näher zusammen, was bedeutet, dass eine größere Kopplungslänge Lc erforderlich ist, um den Punkt der vollständigen Leistungsübertragung, insbesondere bei Lc=506,9 µm , zu erreichen, wie in den Figs 7 und 9 zu sehen ist. Für MO-Materialien ähnlich BIG oder Ce:YIG, $g \approx 0.06$, für die das *Ratio* den erforderlichen Wert für 2*a* = 0,72 µm erreicht, dies entspricht einem $L_c \approx 100$ µm. Die Verwendung einer solchen Struktur kann dazu führen, dass *I. R* > 30 *dB* mit minimalem *I. L* < 1 *dB*.

Für noch niedrigere *g* steigt $L_c$ weiter an, was jedoch keine Auswirkungen auf *I.L.* hat, wenn Silizium oder Siliziumnitrid als Wellenleitermaterial verwendet wird, liegen die Verluste im Bereich von wenigen db/cm.

## Optischer Schalter/Zirkulator

Die optischen Schalter 1a (siehe Fig. 14) und 1b (siehe Fig. 15) beziehen sich auf die Ausrichtung der externen Magnetisierung nach innen und nach außen. Die optischen Zirkulatoren 2a, 2b und 2c sind in Figs 16, 17 und 18 dargestellt. Die Figs. 14 bis 18 zeigen jeweils eine 2D-Draufsicht des vorgeschlagenen Designs sowie den Weg der elektromagnetischen Signalausbreitung (siehe fettgedruckte Pfeile in den Figs. 14 bis 18) in jedem Fall.

Bei dem optischen Schalter 1a aus Fig. 14 ist das angelegte externe Magnetfeld nach innen gerichtet. Das Signal geht von einem Bereich $I_1$ aus, der bespielsweise eine Laserquelle oder ein PIC sein könnte. Beim Übergang vom Eingangsbereich zum Eingangswellenleiter 210, $IW_1$ mit den Abmessungen ( $IW_1^w$, $IW_1^l$ )µm durch den Port $P_{I_1}$ werden vernachlässigbare Rückwärtsreflexionen (B.R) vorausgesetzt, die als $R_{I_1}$ quantifiziert werden können. Das verbleibende normalisierte Signal, $T_{I_1}$ wird in zwei gleiche Signale aufgeteilt, indem ein adiabatischer Koppler $C_1$ , insbesondere mit den Abmessungen ( $C_1^w$ , $C_1^l$ )µm, verwendet wird. Der Koppler sollte so ausgelegt sein, dass B.R , $R_{C_1}^{a_1,b_1}$ vermieden wird, was an dieser Schnittstelle auftreten kann. Die gleichmäßig aufgeteilten Signale $T_{C_1}^{a_1,b_1}$ treten in die Wellenleiter *a* und *b* mit den Abmessungen ( $Wa_1^w$, $Wa_1^l$ )µm bzw. ( $Wb_1^w$ , $Wb_1^l$ )µm ein. Hier befindet sich das MO-Material in der Zwischenschicht 20 zwischen den Wellenleitern a, b der Abmessung ( $MO_1^w, MO_1^l$ )µm und der Abdeckschichten 30, auch *Cl*-Mantelschicht genannt, außen. Dies ist der Wechselwirkungsbereich, in dem die geraden und ungeraden gekoppelten Moden Leistung austauschen. Am Ende, d. h. nach der Ausbreitung über eine Strecke, die der Kopplungslänge entspricht, konzentriert sich eine maximale, insbesondere die gesamte, Leistung im Wellenleiter *a*, und im Wellenleiter *b* verbleibt eine minimale, insbesondere keine, Leistung. *B.R* kann auch erwartet werden als $R_{O_1}$ wenn $T_{O_1}$ vom Ausgangswellenleiter $OW_1$ mit den Abmessungen ( $OW_1^w$, $OW_1^l$ )µm durch den Port $P_{O_1}$ zum Ausgangsbereich $O_1$ läuft.

Wenn die externe Magnetisierung umgeschaltet wird und sich von innen nach außen orientiert, tritt das gleiche Phänomen auf (siehe Fig. 15). In diesem Fall wird das Licht jedoch nach der Ausbreitung über eine Kopplungsstrecke im Wellenleiter *b* konzentriert. Das Ausgangssignal $T_{O_1}$ läuft vom Ausgangswellenleiter $OW_2$ mit den Abmessungen ( $OW_2^w$ , $OW_2^l$ )µm durch den Port $P_{O_2}$ zum Ausgangsbereich $O_2$.

In Fig. 10 ist die Leistung P in den mindestens zwei Wellenleitschichten 10 (d.h. Wellenleiter a (schwarz) und b (grau)) der mehrlagigen Signalleitstruktur 100 als Funktion der Kopplungslänge Lc in Vorwärtsrichtung dargestellt, insbesondere welche beispielsweise in einem Schalter oder einem Zirkulator Anwendung findet. Der Fig. 10 ist zu entnehmen, dass mit steigender Kopplungslänge Lc, die Konzentration der Leistung P in dem Wellenleiter a ansteigt, während sie gleichzeitig im Wellenleiter absinkt. Bei einer Kopplungslänge von etwa Lc=500 µm ist die Leistung P im Wellenleiter a maximal und im Wellenleiter b minimal.

Im Falle eines Zirkulators (siehe Figs. 16 bis 18) gibt es drei Ports mit einer festen externen Magnetisierungsausrichtung. Der gleichen Beschreibung wie beim Schalter folgend wird das Eingangssignal von $P_{I_1}$ ausgegeben durch $P_{O_2}$. Wenn der zweite Port, $P_{I_2}$ erregt wird, dann wird das Ausgangssignal von $PO_3$ gesammelt. Wenn schließlich der dritte Port, $P_{I_3}$ erregt wird, dann wird das Ausgangssignal von $P_{O_1}$ gesammelt. Aus Redundanzgründen wird auf eine weitere Beschreibung der Zirkulatoren verzichtet, da die Beschreibung zu den Schaltern in Analogie anwendbar ist.

## Optischer Isolator

Der optische Isolator, 3a (siehe Fig. 19) und 3b (siehe Fig. 20), weist eine Ausbreitungsrichtung in Vorwärts- bzw. Rückwärtssinn auf, wobei der Vorwärtssinn in Fig 19 durch die fettgedruckten Pfeile entlang der +x-Achse dargestellt ist

EP 4 592 741 A1

und der Rückwärtssinn in Fig. 20 durch die fettgedruckten Pfeile entlang der -x-Achse dargestellt ist. Die Figs 19 und 20 zeigen jeweils eine 2D-Draufsicht des vorgeschlagenen Designs sowie den Weg der elektromagnetischen Signalausbreitung (siehe fettgedruckte Pfeile) in jedem Sinn.

Im Vorwärtssinn startet das Signal von einem Bereich $I_1$, der eine Laserquelle oder ein PIC sein kann. Beim Übergang von der Eingangsregion zum Eingangswellenleiter 210, $IW_1$ mit den Abmessungen ( $IW_1^w$, $IW_1^l$ )μm durch den Port $P_{I_1}$ sind vernachlässigbare B.R vorgesehen und können als $R_{I_1}$ quantifiziert werden. Das verbleibende normalisierte Signal, $T_{I_1}$ wird in zwei gleiche Signale aufgeteilt, indem ein adiabatischer Koppler $C_1$ mit den Abmessungen ( $C_1^w$, $C_1^l$ )μm verwendet wird. Der Koppler sollte so ausgelegt sein, dass $B.R$ vermieden wird, was auch an dieser Schnittstelle $R_{C_1}^{a_1,b_1}$ auftreten kann. Die gleichmäßig aufgeteilten Signale $T_{C_1}^{a_1,b_1}$ treten in die Wellenleiter $a$ und $b$ mit den Abmessungen ( $Wa_1^w$, $Wa_1^l$ )μm bzw. ( $Wb_1^w$, $Wb_1^l$ )μm ein. Hier wird das MO-Material aus der Zwischenschicht 20 zwischen den Wellenleitern 10, a, b der Abmessung ( $MO_1^w, MO_1^l$ )μm platziert, und der Abdeckschichten 30, oder auch *Cl*-Mantelschicht genannt, außen. Dies ist die Wechselwirkungsregion, in der die geraden und ungeraden gekoppelten Moden in Gegenwart externer Magnetisierung Leistung austauschen. In der Mitte, nach der ersten Kopplungslänge LC, konzentriert sich die gesamte Leistung im Wellenleiter a. Nach der Ausbreitung um eine weitere Kopplungslänge koppelt das Signal evaneszent zurück in den Wellenleiter *b*. An diesem Punkt sind die Signale von gleicher Intensität $T_{C_2}^{a_1,b_1}$ und kombinieren sich durch den zweiten Koppler $C_2$ mit den Abmessungen ( $C_2^w$, $C_2^l$ )μm zu einem einzigen Signal. Durch die Rekombination der Signale $R_{C_2}^{a_1,b_1}$ kann auch *B.R* erwartet werden. Dann läuft $T_{O_2}$ vom Ausgangs-wellenleiter 220, $OW_2$ mit den Abmessungen ( $OW_2^w$, $OW_2^l$ )μm durch den Port $P_{O_2}$ zum Ausgangsbereich $O_2$, der eine andere optische Komponente oder ein PIC sein kann. Unter der Annahme, dass kein *I.L* durch die dielektrischen Wellenleiter vorhanden ist und der *B.R* minimal ist, ist die Vorwärtsübertragung $T_{O_2}^f \approx 1$ .

Im Rückwärts-Vorwärts-Sinn beginnt das Signal in einem Bereich $I_1$, der beispielsweise eine optische Komponente oder ein PIC sein kann. Beim Übergang von der Eingangsregion zum Eingangswellenleiter 210, $IW_1$ mit den Abmessungen ( $IW_1^w$, $IW_1^l$ )μm durch den Port $P_{I_1}$ sind vernachlässigbare B.R vorgesehen und können als $R_{I_1}$ quantifiziert werden. Das verbleibende normalisierte Signal, $T_{I_1}$ wird in zwei gleiche Signale aufgeteilt, indem ein adiabatischer Koppler $C_1$ mit den Abmessungen ( $C_1^w$, $C_1^l$ )μm verwendet wird. Der Koppler sollte so ausgelegt sein, dass *B.R* vermieden wird, was auch an dieser Schnittstelle $R_{C_1}^{a_1,b_1}$ auftreten kann. Die gleichmäßig aufgeteilten Signale $T_{C_1}^{a_1,b_1}$ gelangen in die Wellenleiter a und b mit den Abmessungen ( $Wa_1^w$, $Wa_1^l$ )μm bzw. ( $Wb_1^w$, $Wb_1^l$ )μm. Hier wird die mehrlagige, insbesondere fünfschichtige, Signalstruktur gebildet, wobei das MO-Material in der Zwischenschicht 20 zwischen den Wellenleitern 10, a, b der Dimension ( $MO_1^w, MO_1^l$ )μm platziert ist, und der Abdeckschichten 30, welche auch als *Cl*-Mantelschicht bezeichnet werden könnte, außerhalb. Dies ist der Wechselwirkungsbereich, in dem die geraden und ungeraden gekoppelten Moden in Gegenwart externer Magnetisierung Leistung austauschen. In der Mitte, nach der ersten Kopplungslänge, konzentriert sich die gesamte Leistung im Wellenleiter *b*. In diesem Bereich ist ein SWG oder ein Resonator *SG* mit den Abmessungen ( $SG^w, SG^l$ )μm platziert. Bei richtiger Auslegung der Teilung und des Füllfaktors strahlt der SG die optische Mode nach außen. Auf diese Weise koppelt sich kein Licht in $C_2$ und kein Licht erreicht den Ausgangswellenleiter und das Portsystem. Unter der Annahme, dass das Licht vollständig von den Gittern abgestrahlt wird, ist die Rückwärtsübertragung $T_{O_2}^f \approx 0$ .

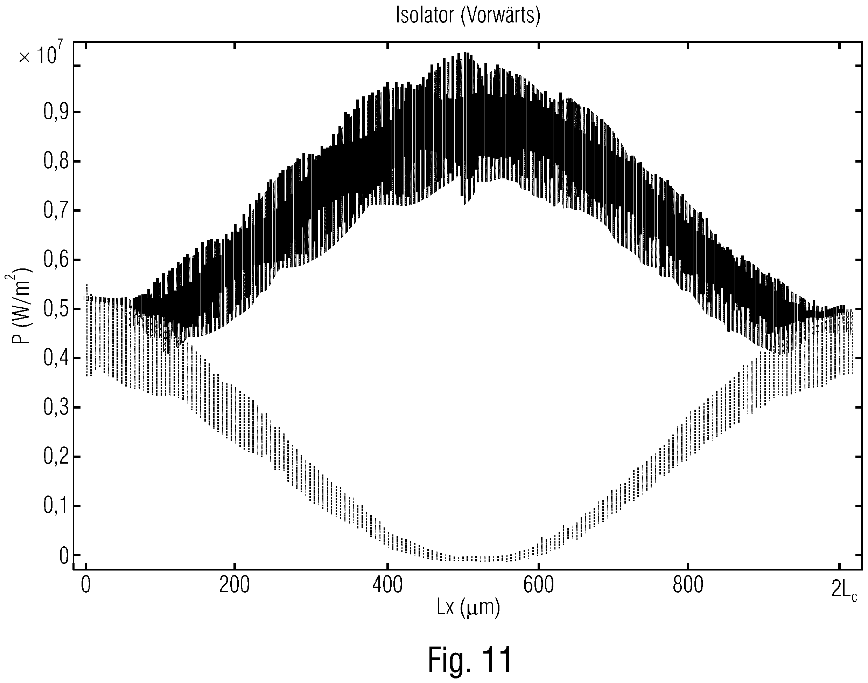

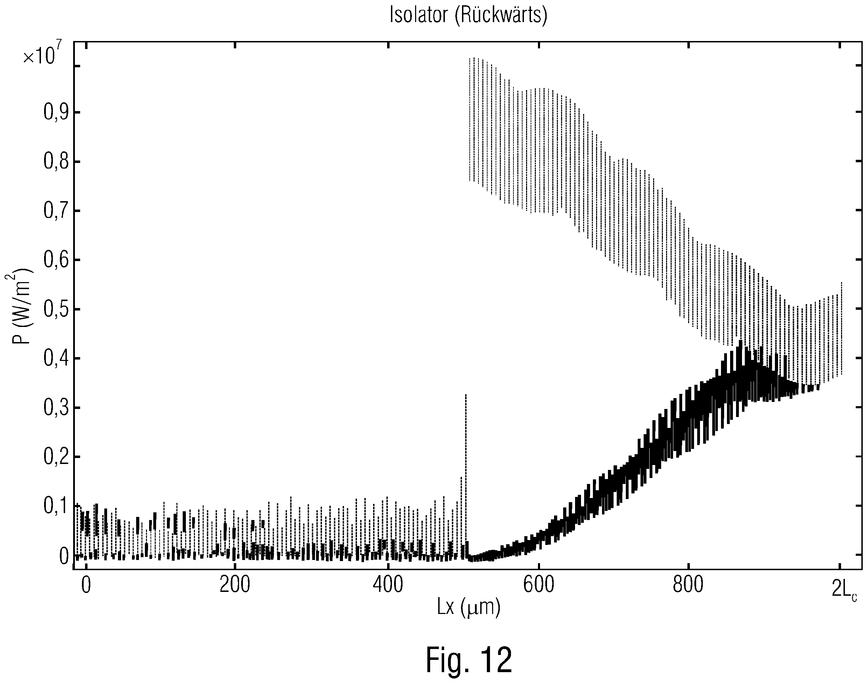

Wie zu sehen ist, sind die Vorwärts- und Rückwärtsübertragung voneinander unterschiedlich. Daraus ergibt sich eine Komponente mit hohem Wirkungsgrad: hoher *I.R*, niedriger *I.L* und niedriger *B.R*. In Fig. 11 ist die Leistung P in den mindestens zwei Wellenleitschichten (Wellenleiter a (schwarz) und b (grau)) der mehrlagigen Signalleitstruktur 100 in Vorwärtsrichtung als Funktion der doppelten Kopplungslänge 2Lc dargestellt, welche beispielsweise in einem Isolator Anwendung findet. Der Fig. 11 ist zu entnehmen, dass bei Erreichen der einfachen Kopplungslänge Lc (bei etwa 500μm) die Leistung P im Wellenleiter a maximal ist, d.h. konzentriert ist, während im Wellenleiter b die Leitung P minimal ist. Bei der doppelten Kopplungslänge 2Lc weisen der Wellenleiter a und der Wellenleiter b eine gleich große Leistung auf. In Fig. 12 ist die Leistung P in den mindestens zwei Wellenleitschichten (Wellenleiter a (schwarz) und b (grau)) der mehrlagigen Signalleitstruktur 100 in Rückwärtsrichtung als Funktion der doppelten Kopplungslänge 2Lc dargestellt, welche beispielsweise in einem Isolator Anwendung findet.

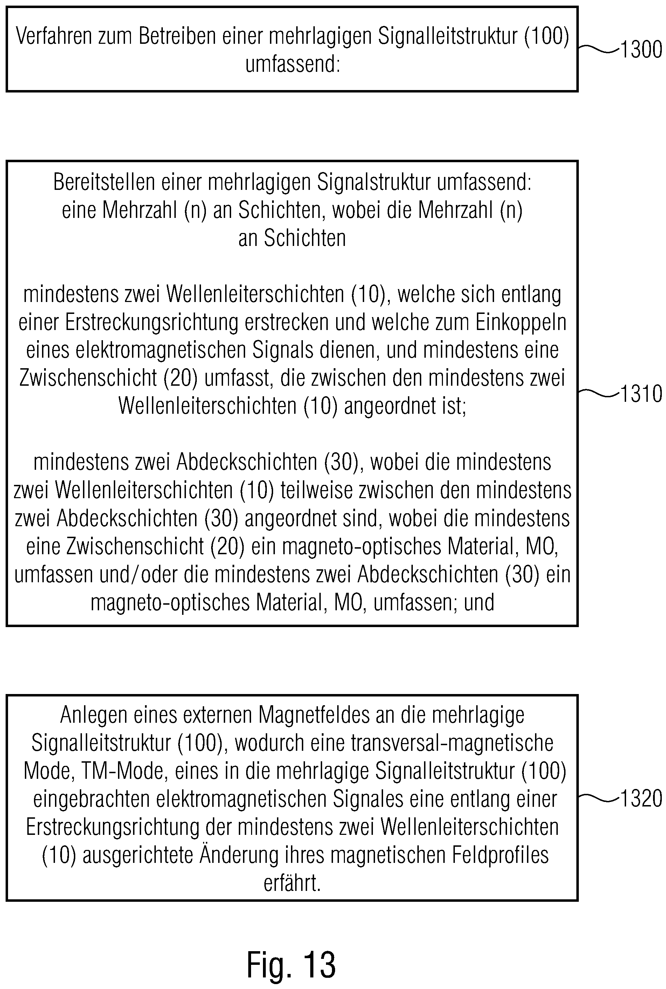

Ein weiterer Aspekt der vorliegenden Erfindung betrifft ein Verfahren 1300 zum Betreiben einer mehrlagigen Signalleitstruktur 100, insbesondere mit einer hierin beschriebenen mehrlagigen Signalleitstruktur 100. Das Verfahren 1300 ist in Fig. 13 als Flussdiagramm wiedergegeben. Das Verfahren 1300 umfasst in Schritt 1310 ein Bereitstellen einer mehrlagigen Signalstruktur, welche umfasst: eine Mehrzahl n an Schichten, wobei die Mehrzahl n an Schichten mindestens zwei Wellenleiterschichten 10, welche sich entlang einer Erstreckungsrichtung erstrecken und welche zum Einkoppeln eines elektromagnetischen Signals dienen, und mindestens eine Zwischenschicht 20 umfasst, die zwischen den mindestens zwei Wellenleiterschichten 10 angeordnet ist; und mindestens zwei Abdeckschichten 30, wobei die mindestens zwei Wellenleiterschichten 10 teilweise zwischen den mindestens zwei Abdeckschichten 30 angeordnet sind, wobei die mindestens eine Zwischenschicht 20 ein magneto-optisches Material, MO, umfasst und/oder die mindestens zwei Abdeckschichten (30) ein magneto-optisches Material, MO, umfassen. In Schritt 1310 wird insbesondere eine hierin beschriebene mehrlagige Signalleitstruktur 100 bereitgestellt. Alle bereits getätigten Ausführungen zu der mehrlagigen Signalleitstruktur 100 können als Verfahrensschritt 1310 interpretiert werden, welche jedoch nachfolgen aus Redundanzgründen nicht wieder als Verfahrensschritte beschrieben werden. Das Verfahren 1300 umfasst in Schritt 1320 ein Anlegen eines externen Magnetfeldes an die mehrlagige Signalleitstruktur 100, wodurch eine transversal-magnetische Mode, TM-Mode, oder eine transversal-elektrische Mode, TE-Mode, eines in die mehrlagige Signalleitstruktur 100 eingebrachten elektromagnetischen Signales eine entlang einer Erstreckungsrichtung der mindestens zwei Wellenleiterschichten 10 ausgerichtete Änderung ihres elektromagnetischen Feldprofiles erfährt. Schritt 1310 ist vor Schritt 1320 auszuführen. Bei dem vorgeschlagenen werden gekoppelte Moden zunächst entkoppelt und in einer Wellenleitschicht 10, beispielsweise in Wellenleiter a, allein oder überwiegend konzentriert. Die entkoppelten Moden werden schließlich wieder in Form eines Ausgangssignal gekoppelt. Das Ausgangssignal kann dann weiterverarbeitet werden.

Abhängig von einer Ausrichtung des externen Magnetfeldes zu der mehrlagigen Signalleitstruktur 100 erfolgt ein Konzentrieren des elektromagnetischen Signales in nur einem der mindestens zwei Wellenleiterschichten 10. Das Konzentrieren des elektromagnetischen Signales in nur einem der mindestens zwei Wellenleiterschichten 10 ist beispielsweise in den Figs. 10, 11 und 12 zu sehen.

In Fig. 10 ist die Leistung P in den mindestens zwei Wellenleitschichten 10 (d.h. Wellenleiter a (schwarz) und b (grau)) der mehrlagigen Signalleitstruktur 100 als Funktion der Kopplungslänge Lc in Vorwärtsrichtung dargestellt, insbesondere welche beispielsweise in einem Schalter oder einem Zirkulator Anwendung findet. Der Fig. 10 ist zu entnehmen, dass mit steigender Kopplungslänge Lc, die Konzentration der Leistung P in dem Wellenleiter a ansteigt, während sie gleichzeitig im Wellenleiter absinkt. Bei einer Kopplungslänge von etwa Lc=500 $\mu$m ist die Leistung P im Wellenleiter a maximal und im Wellenleiter b minimal.

In Fig. 11 ist die Leistung P in den mindestens zwei Wellenleitschichten (Wellenleiter a (schwarz) und b (grau)) der mehrlagigen Signalleitstruktur 100 in Vorwärtsrichtung als Funktion der doppelten Kopplungslänge 2Lc dargestellt, welche beispielsweise in einem Isolator Anwendung findet. Der Fig. 11 ist zu entnehmen, dass bei Erreichen der einfachen Kopplungslänge Lc (bei etwa 500$\mu$m) die Leistung P im Wellenleiter a maximal ist, d.h. konzentriert ist, während im Wellenleiter b die Leitung P minimal ist. Bei der doppelten Kopplungslänge 2Lc weisen der Wellenleiter a und der Wellenleiter b eine gleich große Leistung auf.

In Fig. 12 ist die Leistung P in den mindestens zwei Wellenleitschichten (Wellenleiter a (schwarz) und b (grau)) der mehrlagigen Signalleitstruktur 100 in Rückwärtsrichtung als Funktion der doppelten Kopplungslänge 2Lc dargestellt, welche beispielsweise in einem Isolator Anwendung findet.

In Figs. 10 bis 12 ist zu sehen, dass für ein MO-Material mit beispielsweise einem verwendeten gyrotropischen Niveau von $g \approx 0.01$, für welches das Verhältnis (Ratio) einen erforderlichen Wert von 2a=0,97 $\mu$m erreicht, was einer Kopplungslänge von Lc=500$\mu$m entspricht, werden von I.R> 30dB mit einem I.L < 1dB erreicht werden. Für diesen Fall ist die Leistung P in den Wellenleitern a, b bis LC (in Fig. 10 für einen Schalter oder Zirkulator) und bis 2LC (in Figs. 11 und 12 für Isolatoren in Vorwärts und Rückwärtsrichtung) dargestellt.

Wie in Figs. 10 und 11 zu sehen ist, wird die Leistung P des Eingangssignal nach Zurücklegen der einfachen Kopplungslänge Lc vollständig in nur einen Wellenleiter a transferiert, während in dem anderen Wellenleiter b keine Leistung zurückbleibt. Bei Lc kann ein Schalter oder ein Zirkulator das Signal in eine gewünschte Richtung lenken, indem die Orientierung des externen Magnetfeldes kontrolliert wird.

In Fig. 11, welche die Leitungsverteilung in Vorwärtsrichtung in einem Isolator zeigt, ist zu sehen, dass zwischen 0$\mu$m und Lc die Leistungsübertragung der Leistung P vollständig von dem Wellenleiter b (grau) in den Wellenleiter a (schwarz) erfolgt. Nach einer zurückgelegten Strecke Lx des Eingangssignal von mehr als der einfachen Kopplungslänge Lc wird die Leistung teilweise in den Wellenleiter b zurücktransferiert (siehe in Fig. 11 die x-Achse im Bereich Lc>Lx>Lc). Am Ausgangsport bei 2Lc entspricht die Leistung P in den beiden Wellenleitern a, b wider der Ausgangsleitung in den beiden Wellenleitern a, b bei Lx=0. Nach zurücklegen der doppelten Kopplungslänge bei Lx=2Lc weisen beide Wellenleiter ihre ursprüngliche Leistung P auf.

In Fig. 12, welche die Leitungsverteilung in Rückwärtsrichtung in einem Isolator zeigt, ist zu sehen, dass

zwischen 0 $\mu$m und Lc der Leistungstransfer vom Wellenleiter a (schwarz) zum Wellenleiter b (grau) erfolgt. Das Eingangssignal, d.h. die Leistung P, ist vollständig in den Wellenleiter b transferiert (siehe Fig. 12, Bereich zwischen 0$\mu$m und Lc bei 500$\mu$m).

Wann immer eine zusätzliche Struktur SG (siehe Figs 19 und 20) komplementär in dem Wellenleiter b platziert ist, um Licht zu streuen oder zu absorbieren bei Lx=Lc, ist das rückwärts propagierende Signal vollständig verloren, wie man es in Fig. 12 zwischen Lc und 2Lc sieht. Die zusätzliche Struktur SG kann ein zugeschnittener SWG-s oder ein absorbierendes Metall oder ein Resonator oder dergleichen sein.

In Hinblick auf Figs. 11 und 12 kann man zusammenfassen, dass der Unterschied in der Amplitude zwischen dem vorwärts- und dem rückwärtspropagierenden Signal in einer hohen Performance des Isolators mit einem hohen Isolationsverhältnis und sehr geringen Einfügungsverlust und geringer Rückreflektion resultiert

An dieser Stelle sei noch bemerkt, dass für ein geringes gyrotropisches Niveau g die Kopplungslänge Lc, bei der ein maximale Leistungsübertrag stattfinden kann, ansteigt. Dies hat jedoch keine Folgen für den Leistungsübertrag I.L. Wenn beispielsweise Silizium und/oder Siliziumnitrid und/oder Epoxidharz und/oder Polymer in den Wellenleitschichten 10 genutzt wird, liegt der Verlust bei wenigen dB/cm.

Das Verfahren 1300 kann ferner ein Anbringen eines Eingangsports 110 an die mehrlagige Signalleitstruktur 100 umfassen, um gekoppelte Moden des elektromagnetischen Signals in die mindestens zwei Wellenleiterschichten 10 einzubringen, insbesondere in die Wellenleiter a und b. Außerdem kann das Verfahren 1300 ein Anbringen eines Ausgangsports 130 zum Ausleiten eines gekoppelte Moden umfassendes Ausgangssignals. Insbesondere kann der Ausgangsport 130 dazu ausgebildet sein, entkoppelte Moden wieder zu koppeln, um das Ausgangssignal zu definieren.

Das Verfahren 1300 kann ferner ein Aufteilen der gekoppelten Moden des elektromagnetischen Signals auf die mindestens zwei Wellenleiterschichten 10, insbesondere auf die Wellenleiter a und b, umfassen, wie dies bereits zu den Figs. 10 bis 12 beschrieben worden ist. Das Verfahren 1300 kann ferner ein Entkoppeln der Moden während eines Verlaufes der gekoppelten Moden in den mindestens zwei Wellenleiterschichten 10, insbesondere entlang des X-Achse in Erstreckungsrichtung, umfassen, so dass an einem Ende der mindestens zwei Wellenleiterschichten 10, insbesondere nach einer Länge, welche der Kopplungslänge Lc entspricht, entkoppelte Moden in einer der mindestens zwei Wellenleiterschichten 10 vorhanden sind, und ein anschließendes erneutes Koppeln der entkoppelten Moden am oder im Ausgansport zum Erzeugen eines Ausgangssignals. Schließlich kann das Verfahren 1300 ein Ausleiten des Ausgangssignals umfassen. Das Ausgangssignal kann weitergeleitet oder weiter verarbeitet werden.

Die vorgeschlagene technische Lösung weist folgende Vorteile gegenüber dem Stand der Technik auf:

- Das vorgeschlagene Design für den Schalter/Zirkulator und den Isolator ist einfach und erfordert nur minimale technische Eingriffe für die Integration in PICs.

- Zufriedenstellende Schalt-, Zirkulations- und Isolationseffekte lassen sich durch den Einsatz von MO-Materialien mit beliebigem gyrotropischen Niveau vielseitig realisieren. Die kritischen Faktoren für das Erreichen dieser Effekte sind in erster Linie die geometrischen Parameter, insbesondere die Länge und Breite der Signalleitstruktur.

- Dieses innovative Design ist sehr vielversprechend im Bereich der verlustfreien Komponenten, da die primäre Signalausbreitung überwiegend in, insbesondere dielektrischen, Wellenleitern erfolgt und somit unerwünschte Absorptionseffekte umgangen werden.

- Das angelegte externe Magnetfeld arbeitet mit geringem Leistungsverbrauch, wobei ein Seltene-Erden-Magnet oder ein Elektromagnet das MO-Material sättigen kann.

- Im Gegensatz zu Faraday-Rotatoren zeichnet sich die vorgeschlagene technische Lehre durch ihre gelehrte kompakte Grundfläche aus.

- Im Vergleich zu herkömmlichen NRL- und NRPS-Bauelementen weist das Design einen deutlichen Vorteil auf, da es selbst bei größerer Ausbreitungslänge keinen höheren *I.L.* verursacht.

- Im Vergleich zu resonatorbasierten Strukturen zeichnet sich dieses neuartige Design durch eine überlegene Leistung aus, die durch eine größere Bandbreite gekennzeichnet ist. Diese Verbesserung ergibt sich aus der Gyrotropie, die das MO-Material über das gesamte Wellenlängenspektrum aufweist.

- Das Design kann Schalten/Zirkulieren und die Isolierung, in Form von Isolatoren, für TM- und TE-Moden schaffen.

- Die Anpassungsfähigkeit des Designs zeigt sich auch in der Option, herkömmliche gerade Wellenleiter durch SWGs oder PhC-s zu ersetzen. Durch diesen Austausch wird die erforderliche Kopplungslänge effektiv reduziert, um eine nahtlose Leistungsübertragung zwischen verschiedenen Wellenleitern zu ermöglichen.

- Schaltungseffekte können erreicht werden, indem die Orientierung des externen Magnetfeld kontrolliert bzw. verändert wird und/oder indem die Phasen der Eingangssignale kontrolliert werden.

- MO-Materialien können gemäß der dritten Konfiguration verwendet werden, wobei eine andere Ausrichtung des externen Magnetfelds verwendet werden kann, um den Platzbedarf der signalleitenden Struktur zu reduzieren.

Das Zusammentreffen dieser Eigenschaften macht dieses innovative Design attraktiv für beispielsweise On-Chip-Anwendungen.

Die drei hierin beschriebenen Komponenten - der Schalter, der Zirkulator und der Isolator - stützen sich auf die mehrlagige, insbesondere fünfschichtige, Signalstruktur als Kern, welche mindestens eine MO-Schicht umfasst (siehe erste bis dritte Konfiguration). In der vorgeschlagenen mehrlagigen Signalleitstruktur 100 findet der Leistungsaustausch statt, und die verschiedenen sich ausbreitenden Signale nehmen unterschiedliche Wege und durchlaufen verschiedene Prozesse. Obwohl die Komponenten ähnlich wie MZI-s aussehen, unterscheiden sie sich stark voneinander durch die Moden, die im Inneren durchlaufen. Im Vergleich zu herkömmlichen MZI-s, bei denen die Arme weit voneinander entfernt sind und die Moden nicht gekoppelt sind, überschreitet im vorliegenden Fall die Zwischenschicht 20 nicht eine bestimmte Breite und die Moden bleiben in der gesamten Signalleitstruktur vom Eingang bis zum Ausgang gekoppelt. Die Signalleitstruktur 100 könnte weiter ausgenutzt werden, um eine optimale Leistung zu erzielen. Die bestimmte Breite der Zwischenschicht 20 ist so zu wählen, dass in den Wellenleitschichten 10 ein Entkoppeln der geraden und ungeraden Moden erfolgen kann. Die bestimmte Breite ist materialabhängig und geometrieabhängig.

Es sei an dieser Stelle nochmal betont, dass die Herleitung der Theorie zur vorgeschlagenen technischen Lehre der Einfachhalt halber auf fünf Schichten beschränkt worden ist.

Anstelle der fünfschichtigen Signalstruktur können n-Schichten, insbesondere in z-Richtung und/oder y-Richtung, verwendet werden, um beispielsweise die Anzahl der Ausgangskanäle in beliebiger Richtung zu erhöhen oder zu senken oder um Leistung mit verschiedenen Wellenleitern auszutauschen.

Auch Materialien mit unterschiedlichen Indizes können in die Signalstruktur integriert werden: Beispielsweise an den Seiten des Wellenleiters platziert, um die Modenbegrenzung in den Wellenleitern zu erhöhen und/oder in der Mitte der Signalleitstruktur platziert, um das Licht mehr in Richtung der Wellenleiter zu drücken. Außerdem können mehr als eine Signalleitstruktur gestapelt werden, um auch in y-Richtung gekoppelte Moden zu erhalten.

Auch die Lage der MO-Schicht(en) kann/können zu unterschiedlichen Designkonfigurationen führen:

a) Das MO-Material kann als Zwischenschicht 20 zwischen den beiden Wellenleitern *a* und *b* platziert werden(erste Konfiguration gemäß Fig. 1).

b) Das MO-Material kann auf den gegenüberliegenden Seiten der Wellenleiter, a und *b, in den Abdeckschichten* 30 platziert werden (zweite Konfiguration gemäß Fig. 2).

c) Das MO-Material kann als Zwischenschicht 20 zwischen den beiden Wellenleitern *a* und *b und* auf den gegenüberliegenden Seiten der Wellenleiter, *a* und *b, in den Abdeckschichten 30* platziert werden(dritte Konfiguration gemäß Fig. 3)

d) Das MO-Material kann teilweise oder vollständig geätzt werden, um Platz für Rippen- und Stegwellenleiterformate zu schaffen (nicht in den Figs. dargestellt).

Ohne angelegtes externes Magnetfeld sind die Intensitäten in der Signalleitstruktur 100 an den beiden Ports gleich. In diesem Fall erfolgt kein Austausch von Leistung. Daher sollte die nach einer beliebigen Ausbreitungslänge aufgezeichnete Intensität in beiden Armen gleich sein.

Im Falle eines nach innen gerichteten externen Magnetfeldes, bei dem das MO-Material gesättigt ist, ist ein Ungleichgewicht zwischen den Ausgangsleistungen feststellbar (siehe Figs. 10 bis 12). Die ungleichen Amplituden hängen von der Länge der Signalleitstruktur 100, dem Wellenleitermaterial der Wellenleitschichten 10 und dem Design ab. In diesem Fall sollte z. B. nach einer Kopplungslängenausbreitung die Intensität im Wellenleiter *a* höher sein.

Im Falle eines nach außen gerichteten Magnetfeldes, bei dem das MO-Material gesättigt ist, ist ein Ungleichgewicht zwischen den Ausgangsleistungen feststellbar. Die ungleichen Amplituden hängen von der Länge der Signalleitstruktur 100, dem Wellenleitermaterial in dem Wellenleitschichten 10 und dem Design ab. In diesem Fall sollte z. B. nach einer Kopplungslängenausbreitung die Intensität im Wellenleiter *b* höher sein.

Optische Schalter, Zirkulatoren und Isolatoren sind wichtige Komponenten in modernen optischen Netzen und geben spezifische Anforderungen an die effiziente Verwaltung und Weiterleitung optischer Signale an.

Optische Schalter sind dafür ausgelegt, den Pfad optischer Signale innerhalb eines Netzes selektiv zu steuern. Sie erfüllen den Bedarf an einer dynamischen und flexiblen Umleitung optischer Signale und ermöglichen dadurch flexible Netzrekonfiguration und Wellenlängenumschaltung. Optische Schalter spielen eine wichtige Rolle bei der Verbesserung der Netzeffizienz und -zuverlässigkeit, indem sie eine schnelle Reaktion auf sich ändernde Verkehrsanforderungen, Fehlertoleranz und Wellenlängenverwaltung ermöglichen. Ihre Fähigkeit, Lichtsignale zu verschiedenen Ausgangsports oder Fasern umzuleiten, macht sie für Netzbetreiber unverzichtbar, die die Ressourcenausnutzung optimieren und die Gesamtleistung von optischen Kommunikationssystemen verbessern wollen. Derzeit werden diese Schalter in großem Umfang in PICs für programmierbare Photonik, neuromorphes Rechnen usw. eingesetzt. Zusammenfassend lässt sich sagen, dass optische Zirkulatoren und Schalter zur Robustheit und Anpassungsfähigkeit moderner optischer Kommunikationssysteme beitragen. In ähnlicher Weise werden optische Zirkulatoren verwendet, um Signale verschiedener Wellenlängen an bestimmte Ziele zu leiten. Dies ermöglicht die Übertragung mehrerer Datenströme über eine einzige optische Faser, wodurch die Datenkapazität des Kommunikationsnetzes erhöht wird.

Ein solches Schalterdesign kann auch verwendet werden, um die Intensität des angelegten externen Magnetfelds zu erfassen. Dies findet große Anwendung im Bereich der Magnetometrie. Dabei kann man durch Back-Engineering aus dem Ausgang der Anschlüsse eins und zwei die Eigenschaften des externen Magnetfelds ableiten.

Optische Isolatoren finden aufgrund ihrer Fähigkeit, den Lichtfluss in eine Richtung zu kontrollieren und zu verwalten, während sie ihn in die andere Richtung blockieren, in verschiedenen Bereichen wesentliche Anwendungen. Eine wichtige Anwendung ist der Einsatz in faseroptischen Kommunikationssystemen. Bei diesen Systemen spielen optische Isolatoren eine entscheidende Rolle bei der Vermeidung von Rückstreuung und B.R., was die Signalqualität verschlechtern können. Durch die Isolierung der ein- und ausgehenden Lichtwege tragen sie dazu bei, die Signalintegrität aufrechtzuerhalten und Signalverluste zu minimieren, was eine zuverlässige Datenübertragung über große Entfernungen gewährleistet. Darüber hinaus werden optische Isolatoren in Lasersystemen eingesetzt, um empfindliche Laserkomponenten vor Schäden durch Rückkopplungen zu schützen, die die Laserausgabe destabilisieren können. Diese Anwendung gewährleistet einen stabilen und effizienten Laserbetrieb in verschiedenen Bereichen, darunter medizinische Geräte, Telekommunikation und Forschungslabors.

Obwohl manche Aspekte im Zusammenhang mit einer Vorrichtung bzw. einem Verfahren beschrieben wurden, versteht es sich, dass diese Aspekte auch eine Beschreibung eines entsprechenden Verfahrens bzw. einer Vorrichtung darstellen, sodass ein Block oder ein Bauelement einer Vorrichtung bzw. eines Systems auch als ein entsprechender Verfahrensschritt oder als ein Merkmal eines Verfahrensschrittes zu verstehen ist und anders herum. Auf eine vollständige Darstellung der vorliegenden Erfindung in Form von Verfahrensschritten bzw. in Form von Vorrichtungsmerkmalen wird vorliegend aus Redundanzgründen abgesehen.

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn, es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

**Referenzen**

[1] Jalas, D. et al. (2013) 'What is - and what is not - an optical isolator', Nature Photonics, 7(8), S. 579-582.

[2] Murai, T. et al. (2020) 'Nonvolatile MO-al switches integrated with a magnet stripe array', Optics Express, 28(21), S. 31675.

[3] Shoji, Y., Taniguchi, S. and Yajima, S. (2023) 'Nonvolatile photonic switch with magnetic materials on a silicon photonic platform [invited]', Optical Materials Express, 13(9), S. 2489.

[4] Davoyan, A.R. and Engheta, N. (2013) 'Nanoscale plasmonic circulator', New Journal of Physics, 15(8), S. 083054.

[5] Smigaj, W. et al. (2010) 'MO-al circulator designed for operation in a uniform external magnetic field', Optics Letters, 35(4), S. 568.

[6] Wang, Z. and Fan, S. (2005) 'Optical circulators in two-dimensional MO-al photonic crystals', Optics Letters, 30(15), S. 1989.

[7] Urs, N.O. et al. (2016) 'Advanced MO-al microscopy: Imaging from picoseconds to centimeters - imaging spin waves and temperature distributions (invited)', AIP Advances, 6(5).

[8] Van Parys, W. et al. (2006) 'Transverse magnetic mode nonreciprocal propagation in an amplifying AIGaInAs/InP optical waveguide isolator', Applied Physics Letters, 88(7).

[9] Shimizu, H. und Nakano, Y. (2006) 'Fabrication and characterization of an InGaAsp/InP active waveguide optical isolator with 14.7 db/mm TE mode nonreciprocal attenuation', Journal of Lightwave Technology, 24(1), S. 38-43.

[10] Fujita, J. et al. (2000) 'Waveguide optical isolator based on mach-zehnder interferometer', Applied Physics Letters, 76(16), S. 2158-2160.

[11] Kono, N. et al. (2007) 'Nonreciprocal microresonators for the miniaturization of optical waveguide isolators', Optics Express, 15(12), S. 7737.

[12] Bi, L. et al. (2011) 'On-chip optical isolation in monolithically integrated non-reciprocal optical resonators', Nature Photonics, 5(12), S. 758-762.

[13] Tien, M.-C. et al. (2011) 'Silicon Ring isolators with bonded nonreciprocal MO garnets', Optics Express, 19(12), S. 11740.

[14] Firby, C.J. und Elezzabi, A.Y. (2016) 'Magnetoplasmonic isolators utilizing the nonreciprocal phase shift', Optics Letters, 41(3), S. 563.

[15] Abadian, S. et al. (2021) 'Broad-band Plasmonic Isolator compatible with lowgyrotropy MO-al material', Optics Express, 29(3), S. 4091.

[16] Ando, K., Okoshi, T. und Koshizuka, N. (1988) 'Waveguide MO isolator fabricated by laser annealing', Applied Physics Letters, 53(1), S. 4-6.

[17] Castera, J.-P. et al. (1989) 'Single mode integrated magnetooptical isolator', SPIE Proceedings [Preprint].

[18] Levy, M. et al. (1996) 'Integrated optical isolators with sputter-deposited thin-film magnets', IEEE Photonics Technology Letters, 8(7), S. 903-905.

[19] Sugimoto, N. et al. (1996) 'A hybrid integrated waveguide isolator on a silica-based planar Lightwave Circuit', Journal of Lightwave Technology, 14(11), S. 2537-2546.

[20] Shintaku, T. (1998) 'Integrated Optical Isolator based on efficient nonreciprocal radiation mode conversion', Applied Physics Letters, 73(14), S. 1946-1948.

[21] Fujita, J. et al. (2000) 'Waveguide optical isolator based on mach-zehnder interferometer', Applied Physics Letters, 76(16), S. 2158-2160.

[22] Yokoi, H. et al. (2000) 'Demonstration of an optical isolator with a semiconductor guiding layer that was obtained by use of a nonreciprocal phase shift', Applied Optics, 39(33), S. 6158.

[23] Van Parys, W. et al. (2006) 'Transverse magnetic mode nonreciprocal propagation in an amplifying algainas/inp optical waveguide isolator', Applied Physics Letters, 88(7).

[24] Shimizu, H. und Nakano, Y. (2006) 'Fabrication and characterization of an InGaAsp/InP active waveguide optical isolator with 14.7 db/mm TE mode nonreciprocal attenuation', Journal of Lightwave Technology, 24(1), S. 38-43.

[25] Kono, N. et al. (2007) 'Nonreciprocal microresonators for the miniaturization of optical waveguide isolators', Optics Express, 15(12), S. 7737.

[26] Shoji, Y. und Mizumoto, T. (2014) 'MO-al non-reciprocal devices in Silicon Photonics', Science and Technology of Advanced Materials, 15(1), S. 014602.

[27] Montoya, J. et al. (2009) 'Surface plasmon isolator based on nonreciprocal coupling', Journal of Applied Physics, 106(2).

[28] Zhu, H. und Jiang, C. (2011) 'Optical isolation based on nonreciprocal micro-ring resonator', Journal of Lightwave Technology, 29(11), S. 1647-1651.

[29] Bi, L. et al. (2011) 'On-chip optical isolation in monolithically integrated non-reciprocal optical resonators', Nature Photonics, 5(12), S. 758-762.

[30] Zhang, Y. et al. (2019) 'Monolithic integration of broadband optical isolators for polarization-diverse silicon photonics', Optica, 6(4), S. 473.

[31] Srinivasan, K. et al. (2020) 'High-gyrotropy seedlayer-free CE:TbIG for monolithic laser-matched SOI optical isolators', Conference on Lasers and Electro-Optics [Preprint].

[32] Abadian, S. et al. (2021) 'Broad-band Plasmonic Isolator compatible with lowgyrotropy MO-al material', Optics Express, 29(3), S. 4091.

[33] Zongfu Yu und Shanhui Fan (2010) 'Integrated nonmagnetic optical isolators based on photonic transitions*, IEEE Journal of Selected Topics in Quantum Electronics, 16(2), S. 459-466.

[34] Wang, C., Zhong, X.-L. und Li, Z.-Y. (2012) 'Linear and passive silicon optical isolator', Scientific Reports, 2(1).

[35] Ruesink, F. et al. (2016) 'Nonreciprocity and magnetic-free isolation based on optomechanical interactions', Nature Communications, 7(1).

[36] Kittlaus, E.A. et al. (2020) 'Electrically driven acousto-optics and broadband nonreciprocity in Silicon Photonics', Nature Photonics, 15(1), S. 43-52.

[37] Tian, H. et al. (2021) 'Magnetic-free silicon nitride integrated optical isolator', Nature Photonics, 15(11), S.

828-836.

[38] Goswami, K. et al. (2022) 'Design and analysis of all-optical isolator based on linear photonic crystal', Brazilian Journal of Physics, 52(3).

[39] Yu, M. et al. (2023) 'Integrated electro-optic isolator on thin-film lithium niobate', Nature Photonics, 17(8), S. 666-671.

[40] Zvezdin, A.K., Zvezdin, A.K. und Kotov, V.A. (2020) Modern magnetooptics and magnetooptical materials. Boca Raton: CRC Press Taylor & Francis Group.

[41] Tepper, T. und Ross, C.A. (2003) 'Pulsed laser deposition and refractive index measurement of fully substituted bismuth iron garnet films', Journal of Crystal Growth, 255(3-4), S. 324-331.

[42] Chuang, S.L. (1995) Physics of optoelectronic devices. New York, NY: Wiley.

**Patentansprüche**

1. Mehrlagige Signalleitstruktur (100) umfassend:
   eine Mehrzahl (n) an Schichten, wobei die Mehrzahl (n) an Schichten

   mindestens zwei Wellenleiterschichten (10), welche sich entlang einer Erstreckungsrichtung erstrecken und welche zum Einkoppeln eines elektromagnetischen Signals dienen, und mindestens eine Zwischenschicht (20) umfasst, die zwischen den mindestens zwei Wellenleiterschichten (10) angeordnet ist;
   mindestens zwei Abdeckschichten (30), wobei die mindestens zwei Wellenleiterschichten (10) teilweise oder vollständig zwischen den mindestens zwei Abdeckschichten (30) angeordnet sind, wobei die mindestens eine Zwischenschicht (20) ein magneto-optisches Material, MO, umfasst und/oder die mindestens zwei Abdeckschichten (30) ein magneto-optisches Material, MO, umfassen.

2. Mehrlagige Signalleitstruktur (100) nach Anspruch 1, wobei an die mehrlagige Signalleitstruktur (100) ein externes Magnetfeld anlegbar ist oder angelegt ist, wodurch eine transversal-magnetische Mode, TM-Mode, und/oder eine transversal-elektrische Mode , TE-Mode, des in den mindestens zwei Wellenleiterschichten (10) eingekoppelten elektromagnetischen Signals eine entlang der Erstreckungsrichtung der mindestens zwei Wellenleiterschichten (10) ausgerichtete Änderung ihres elektromagnetischen Feldprofiles erfährt.

3. Mehrlagige Signalleitstruktur (100) nach Anspruch 1 oder 2, wobei die mindestens zwei Wellenleiterschichten (10) und/oder mindestens eine Zwischenschicht (20) und/oder die mindestens zwei Abdeckschichten (30) dielektrisch sind.

4. Mehrlagige Signalleitstruktur (100) nach Anspruch 2 oder 3, wobei das externe Magnetfeld durch ein Seltene-Erden-Magnet oder durch einen Elektromagneten gegeben ist, welcher dazu ausgebildet ist, das MO-Material zu sättigen.

5. Mehrlagige Signalleitstruktur (100) nach Anspruch 4, wobei der Elektromagnet als eine Metallschicht oder eine Halbmetallschicht oder eine Halbleiterschicht ausgebildet ist, welche direkt auf dem Mo-Material oder auf der mindestens einen Abdeckschicht (30) positioniert ist.

6. Mehrlagige Signalleitstruktur (100) nach einem der vorherigen Ansprüche, wobei eine Wellenausbreitung des in die mindestens zwei Wellenleiterschichten (10) eingekoppelten elektromagnetischen Signals jeweils, insbesondere individuell, durch eine Ausbreitungskonstante ($\beta_a$ , $\beta_b$) beschrieben ist, wobei die Ausbreitungskonstanten ($\beta_a$ , $\beta_b$) der mindestens zwei Wellenleiterschichten (10) unterschiedlich sind, $\beta_a \neq \beta_b$.

7. Mehrlagige Signalleitstruktur (100) nach einem der vorherigen Ansprüche 2 bis 4, wobei bei angelegten externen Magnetfeld sich in mindestens einer Wellenleiterschicht (10) der mindestens zwei Wellenleiterschichten (10) mindestens eine TM-Mode entlang der Erstreckungsrichtung ausbreitet, wobei mindestens eine gerade TM-Mode durch eine erste Ausbreitungskonstante ($\beta_e$) und eine ungerade TM-Mode durch eine zweite Ausbreitungskonstante ($\beta_o$) beschrieben ist, wobei die mindestens zwei Wellenleiterschichten (10) jeweils durch die weiteren Ausbreitungskonstanten ($\beta_a$ , $\beta_b$) beschrieben sind, wobei bei einem Verhältnis der Ausbreitungskonstanten von

$$Verh\ddot{a}ltnis = \frac{\beta_a - \beta_b}{\beta_e - \beta_o} = 0.707107$$

eine maximale Leistungsübertragung erfolgt, wobei $\beta_a$ die Ausbreitungskonstante der Grundmode der ersten Wellenleiterschicht (a) der mindestens zwei Wellenleiterschichten (10) *und* $\beta_b$ die Ausbreitungskonstante der Grundmode der zweiten Wellenleiterschicht (10) der mindesten zwei Wellenleiterschichten (10) ist.

8.  Mehrlagige Signalleitstruktur (100) nach einem der Ansprüche, wobei jede Wellenleiterschicht (10) aufgrund ihrer Beschaffenheit eine Kopplungslänge definiert, so dass die in die Wellenleiterschicht (10) eingebrachten gekoppelten Moden nach Zurücklegen der Kopplungslänge Lc entkoppelt sind.

9.  Mehrlagige Signalleitstruktur (100) nach Anspruch 6, wobei die Kopplungslänge Lc eine Funktion der ersten und zweiten Ausbreitungskonstanten ($\beta_e$ , $\beta_o$) der geraden und ungeraden Moden ist und gegeben ist durch:

$$\mathrm{L}_c = \frac{\pi}{\beta_e - \beta_o}$$

10. Mehrlagige Signalleitstruktur (100) nach einem der vorherigen Ansprüche, wobei jedes in der mehrlagigen Signalstruktur verwendetes MO-Material ein gyrotropisches Niveau oder verschiedene gyrotropische Niveaus aufweist.

11. Mehrlagige Signalleitstruktur (100) nach einem der vorherigen Ansprüche, wobei eine Länge (L) der mindestens zwei Wellenleiterschichten (10) und eine Länge (L') der mindestens einen Zwischenschicht (20) gleich lang ausgebildet sind.

12. Mehrlagige Signalleitstruktur (100) nach einem der vorherigen Ansprüche, wobei eine Dicke (d) der mindestens zwei Wellenleiterschichten (10) zwischen 0,1µm und 4µm liegt.

13. Mehrlagige Signalleitstruktur (100) nach einem der vorherigen Ansprüche, wobei die mindestens zwei Wellenleiterschichten (10) entlang der Erstreckungsrichtung parallel zueinander verlaufen.

14. Mehrlagige Signalleitstruktur (100) nach einem der vorherigen Ansprüche, wobei eine Dicke (2a) der mindestens einen Zwischenschicht (20) zwischen einem Wert größer 0µm und 10 µm liegt.

15. Mehrlagige Signalleitstruktur (100) nach einem der vorherigen Ansprüche, wobei eine Dicke (D) einer der Abdeckschichten (30) zwischen einem Wert größer 0 µm und 50 µm oder zwischen 0,0µm und unendlich liegt.

16. Mehrlagige Signalleitstruktur (100) nach einem der vorherigen Ansprüche, wobei der mehrlagigen Signalleitstruktur (100) mindestens ein Eingangsport zum Einleiten des elektromagnetischen Signals und mindestens ein Ausgangsport zum Ausleiten eine Ausgangssignals aufweist, wobei der Eingangsport zum Einleiten gekoppelter Moden des elektromagnetischen Signals in die mindestens zwei Wellenleiterschichten (10) ausgebildet ist und der mindestens eine Ausgangsport zum erneuten Koppeln der in den mindestens zwei Wellenleiterschichten (10) entlang der Erstreckungsrichtung entkoppelten Moden ausgebildet ist.

17. Mehrlagige Signalleitstruktur (100) nach einem der vorherigen Ansprüche, wobei die mehrlagige Signalleitstruktur (100) durch ihren Aufbau ausgebildet ist,

> eine Isolierung für TM- und TE-Moden einer in die mindestens zwei Wellenleiterschichten (10) eingebrachten elektromagnetischen Welle zu schaffen und/oder
> die TM- und TE-Moden in den mindestens zwei Wellenleiterschichten (10) in eine vorgegebene Richtung ausbreiten zu lassen und in der zur vorgegebenen Richtung entgegengesetzten Richtung eine Ausbreitung zu verhindern und/oder
> die TM- und TE-Moden in den mindestens zwei Wellenleiterschichten (10) zirkulieren zu lassen.

18. Mehrlagige Signalleitstruktur (100) nach einem der vorherigen Ansprüche, wobei die mehrlagige Signalleitstruktur (100) als ein Schalter, oder als ein Zirkulator oder als ein Isolator ausgebildet ist.

19. Mehrlagige Signalleitstruktur (100) nach einem der vorherigen Ansprüche, wobei mindestens zwei mehrlagige Signalleitstrukturen (100) gestapelt sind, um gekoppelte Moden senkrecht zu oder in der Erstreckungsrichtung zu erhalten.

20. Mehrlagige Signalleitstruktur (100) nach einem der vorherigen Ansprüche, wobei das MO-Material teilweise oder vollständig geätzt ist, um Platz für ein Rippenwellenleiterformat und/oder ein Stegwellenleiterformat bereitzustellen.

21. Mehrlagige Signalleitstruktur (100) nach einem der vorherigen Ansprüche, wobei eine Wellenleiterschicht (10) Silizium und/oder Siliziumnitrid und/oder Siliziumdioxid und/oder ein Polymer und/oder Sol-Gel und/oder hybride plasmonische-dielektrisches Material umfasst.

22. Mehrlagige Signalleitstruktur (100) nach einem der vorherigen Ansprüche, wobei das MO-Material ein Granat oder ein dotiertes Granat oder dotiertes Siliziumdioxid oder Sol-Gel oder ferromagnetisches Material umfasst.

23. Mehrlagige Signalleitstruktur (100) nach einem der vorherigen Ansprüche, wobei ein Abdeckschicht (30) Siliziumdioxid, SiOz, und/oder Luft und/oder poly methyl methacrylat, PMMA und/oder PVA und/oder SU-8 umfasst.

24. Mehrlagige Signalleitstruktur (100) nach einem der vorherigen Ansprüche, wobei die mehrlagige Signalleitstruktur (100) zwischen einer Entkopplungsstruktur (110), um ein Eingangssignal an einem Eingang der mehrlagigen Signalleitstruktur (100) in amplitudengleiche Signale aufzuteilen, und einer Kopplungsstruktur (120), um ein Ausgangssignal an einem Ausgang der mehrlagige Signalleitstruktur (100) wieder zu koppeln, angeordnet ist.

25. Mehrlagige Signalleitstruktur (100) nach Anspruch 21, wobei die Entkopplungsstruktur (110) und die Kopplungsstruktur (120) als ein Mehrmoden-Interferenz-Koppler (MMI) oder als ein Y-Übergang oder als ein Baumkoppler oder als ein Sternkoppler oder als ein Richtkoppler ausgebildet sind.

26. Mehrlagige Signalleitstruktur (100) nach Anspruch 21 oder 22, wobei die Kopplungsstruktur (129) einen adiabatischen Koppler ($C_1$) umfasst, welcher derart ausgelegt ist, dass Rückwärtsreflexionen vermieden werden.

27. Mehrlagige Signalleitstruktur (100) nach einem der vorherigen Ansprüche, wobei eine Wellenleiterschicht (10) als sich entlang der Erstreckungsrichtung gerader verlaufender Wellenleiter oder als gebogener Wellenleiter oder als Schlitzwellenleiter oder als SWG-Wellenleiter oder als PhC-Wellenleiter oder als plasmonischer-dielektrischer Hybrid-Wellenleiter ausgebildet ist.

28. Verfahren zum Betreiben einer mehrlagigen Signalleitstruktur (100), insbesondere nach einem der Ansprüche 1 bis 25, umfassend:
Bereitstellen einer mehrlagigen Signalstruktur (100) umfassend:

    eine Mehrzahl (n) an Schichten, wobei die Mehrzahl (n) an Schichten
    mindestens zwei Wellenleiterschichten (10), welche sich entlang einer Erstreckungsrichtung erstrecken und welche zum Einkoppeln eines elektromagnetischen Signals dienen, und mindestens eine Zwischenschicht (20) umfasst, die zwischen den mindestens zwei Wellenleiterschichten (10) angeordnet ist;
    mindestens zwei Abdeckschichten (30), wobei die mindestens zwei Wellenleiterschichten (10) teilweise zwischen den mindestens zwei Abdeckschichten (30) angeordnet sind, wobei die mindestens eine Zwischenschicht (20) ein magneto-optisches Material, MO, umfassen und/oder die mindestens zwei Abdeckschichten (30) ein magneto-optisches Material, MO, umfassen; und
    Anlegen eines externen Magnetfeldes an die mehrlagige Signalleitstruktur (100), wodurch eine transversal-magnetische Mode, TM-Mode, oder eine transversal-elektrische Mode, TE-Mode, eines in die mehrlagige Signalleitstruktur (100) eingebrachten elektromagnetischen Signales eine entlang einer Erstreckungsrichtung der mindestens zwei Wellenleiterschichten (10) ausgerichtete Änderung ihres elektromagnetischen Feldprofiles erfährt.

29. Verfahren nach Anspruch 26, wobei abhängig von einer Ausrichtung des externen Magnetfeldes zu der mehrlagigen Signalleitstruktur (100) ein Konzentrieren des elektromagnetischen Signales in nur einem der mindestens zwei Wellenleiterschichten (10) erfolgt.

30. Verfahren nach Anspruch 26 oder 27, umfassend:

    Anbringen an die mehrlagige Signalleitstruktur (100) eines Eingangsport (110), um gekoppelte Moden des elektromagnetischen Signals in die mindestens zwei Wellenleiterschichten (10) einzubringen, und
    Anbringen eines Ausgangsports (130) zum Ausleiten eines gekoppelte Moden umfassendes Ausgangssignals.

**31.** Verfahren nach Anspruch 28, wobei das Verfahren umfasst:

Aufteilen der gekoppelten Moden des elektromagnetischen Signals auf die mindestens zwei Wellenleiterschichten (10);
Entkoppeln der Moden während eines Verlaufes der gekoppelten Moden in den mindestens zwei Wellenleiterschichten (10), so dass an einem Ende der mindestens zwei Wellenleiterschichten (10) entkoppelte Moden in einer der mindestens zwei Wellenleiterschichten (10) vorhanden sind, anschließendes
Erneutes Koppeln der entkoppelten Moden am Ausgangsport zum Ausgangssignal; und
Ausleiten des Ausgangssignals.

Fig. 1

Fig. 2

Fig. 3A

Fig. 3B

Fig. 4

Fig. 5

Fig. 6

Fig. 7

Fig. 8

Fig. 9

Fig. 10

Fig. 11

Isolator (Rückwärts)

Fig. 12

Verfahren zum Betreiben einer mehrlagigen Signalleitstruktur (100) umfassend: — 1300

Bereitstellen einer mehrlagigen Signalstruktur umfassend:
eine Mehrzahl (n) an Schichten, wobei die Mehrzahl (n)
an Schichten

mindestens zwei Wellenleiterschichten (10), welche sich entlang einer Erstreckungsrichtung erstrecken und welche zum Einkoppeln eines elektromagnetischen Signals dienen, und mindestens eine Zwischenschicht (20) umfasst, die zwischen den mindestens zwei Wellenleiterschichten (10) angeordnet ist;

mindestens zwei Abdeckschichten (30), wobei die mindestens zwei Wellenleiterschichten (10) teilweise zwischen den mindestens zwei Abdeckschichten (30) angeordnet sind, wobei die mindestens eine Zwischenschicht (20) ein magneto-optisches Material, MO, umfassen und/oder die mindestens zwei Abdeckschichten (30) ein magneto-optisches Material, MO, umfassen; und — 1310

Anlegen eines externen Magnetfeldes an die mehrlagige Signalleitstruktur (100), wodurch eine transversal-magnetische Mode, TM-Mode, eines in die mehrlagige Signalleitstruktur (100) eingebrachten elektromagnetischen Signales eine entlang einer Erstreckungsrichtung der mindestens zwei Wellenleiterschichten (10) ausgerichtete Änderung ihres magnetischen Feldprofiles erfährt. — 1320

Fig. 13

Fig. 14

Fig. 15

Fig. 16

EP 4 592 741 A1

Fig. 17

Fig. 18

Fig. 19

Fig. 20

Europäisches
Patentamt

European
Patent Office

Office européen
des brevets

# EUROPÄISCHER RECHERCHENBERICHT

Nummer der Anmeldung

EP 25 15 1891

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2015 169833 A (TOKYO INST TECH) 28. September 2015 (2015-09-28) * das ganze Dokument * ----- | 1,2,7-28 | INV. G02F1/095 G02B6/27 |
| X | WO 2009/081487 A1 (SHIBAURA INST TECHNOLOGY [JP]; YOKOI HIDEKI [JP]) 2. Juli 2009 (2009-07-02)  * das ganze Dokument * ----- | 1-6, 11-13, 16-18, 21-23, 28-31 | ADD. G02B6/12 |

**RECHERCHIERTE SACHGEBIETE (IPC)**

G02F
G02B

Der vorliegende Recherchenbericht wurde für alle Patentansprüche erstellt

| Recherchenort | Abschlußdatum der Recherche | Prüfer |
|---|---|---|
| Den Haag | 22. Mai 2025 | Topak, Eray |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 1891

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2025

| Im Recherchenbericht angeführtes Patentdokument | Datum der Veröffentlichung | Mitglied(er) der Patentfamilie | Datum der Veröffentlichung |
|---|---|---|---|
| JP 2015169833 A | 28-09-2015 | JP 6338404 B2<br>JP 2015169833 A | 06-06-2018<br>28-09-2015 |
| WO 2009081487 A1 | 02-07-2009 | KEINE | |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **JALAS, D. et al.** What is - and what is not - an optical isolator. *Nature Photonics*, 2013, vol. 7 (8), 579-582
- **MURAI, T. et al.** Nonvolatile MO-al switches integrated with a magnet stripe array. *Optics Express*, 2020, vol. 28 (21), 31675
- **SHOJI, Y.** ; **TANIGUCHI, S.** ; **YAJIMA, S.** Nonvolatile photonic switch with magnetic materials on a silicon photonic platform [invited. *Optical Materials Express*, 2023, vol. 13 (9), 2489
- **DAVOYAN, A.R.** ; **ENGHETA, N.** Nanoscale plasmonic circulator. *New Journal of Physics*, 2013, vol. 15 (8), 083054
- **SMIGAJ, W. et al.** MO-al circulator designed for operation in a uniform external magnetic field. *Optics Letters*, 2010, vol. 35 (4), 568
- **WANG, Z.** ; **FAN, S.** Optical circulators in two-dimensional MO-al photonic crystals. *Optics Letters*, 2005, vol. 30 (15), 1989
- **URS, N.O. et al.** Advanced MO-al microscopy: Imaging from picoseconds to centimeters - imaging spin waves and temperature distributions (invited). *AIP Advances*, 2016, vol. 6 (5)
- **VAN PARYS, W. et al.** Transverse magnetic mode nonreciprocal propagation in an amplifying AlGaInAs/InP optical waveguide isolator. *Applied Physics Letters*, 2006, vol. 88 (7)
- **SHIMIZU, H.** ; **NAKANO, Y.** Fabrication and characterization of an InGaAsp/InP active waveguide optical isolator with 14.7 db/mm TE mode nonreciprocal attenuation. *Journal of Lightwave Technology*, 2006, vol. 24 (1), 38-43
- **FUJITA, J. et al.** Waveguide optical isolator based on mach-zehnder interferometer. *Applied Physics Letters*, 2000, vol. 76 (16), 2158-2160
- **KONO, N. et al.** Nonreciprocal microresonators for the miniaturization of optical waveguide isolators. *Optics Express*, 2007, vol. 15 (12), 7737
- **BI, L. et al.** On-chip optical isolation in monolithically integrated non-reciprocal optical resonators. *Nature Photonics*, 2011, vol. 5 (12), 758-762
- **TIEN, M.-C. et al.** Silicon Ring isolators with bonded nonreciprocal MO garnets. *Optics Express*, 2011, vol. 19 (12), 11740
- **FIRBY, C.J.** ; **ELEZZABI, A.Y.** Magnetoplasmonic isolators utilizing the nonreciprocal phase shift. *Optics Letters*, 2016, vol. 41 (3), 563
- **ABADIAN, S. et al.** Broad-band Plasmonic Isolator compatible with lowgyrotropy MO-al material. *Optics Express*, 2021, vol. 29 (3), 4091
- **ANDO, K.** ; **OKOSHI, T.** ; **KOSHIZUKA, N.** Waveguide MO isolator fabricated by laser annealing. *Applied Physics Letters*, 1988, vol. 53 (1), 4-6
- **CASTERA, J.-P. et al.** Single mode integrated magnetooptical isolator. *SPIE Proceedings*, 1989
- **LEVY, M. et al.** Integrated optical isolators with sputter-deposited thin-film magnets. *IEEE Photonics Technology Letters*, 1996, vol. 8 (7), 903-905
- **SUGIMOTO, N. et al.** A hybrid integrated waveguide isolator on a silica-based planar Lightwave Circuit. *Journal of Lightwave Technology*, 1996, vol. 14 (11), 2537-2546
- **SHINTAKU, T.** Integrated Optical Isolator based on efficient nonreciprocal radiation mode conversion. *Applied Physics Letters*, 1998, vol. 73 (14), 1946-1948
- **YOKOI, H. et al.** Demonstration of an optical isolator with a semiconductor guiding layer that was obtained by use of a nonreciprocal phase shift. *Applied Optics*, 2000, vol. 39 (33), 6158
- **VAN PARYS, W. et al.** Transverse magnetic mode nonreciprocal propagation in an amplifying algainas/inp optical waveguide isolator. *Applied Physics Letters*, 2006, vol. 88 (7)
- **SHOJI, Y.** ; **MIZUMOTO, T.** MO-al non-reciprocal devices in Silicon Photonics. *Science and Technology of Advanced Materials*, 2014, vol. 15 (1), 014602
- **MONTOYA, J. et al.** Surface plasmon isolator based on nonreciprocal coupling. *Journal of Applied Physics*, 2009, vol. 106 (2)
- **ZHU, H.** ; **JIANG, C.** Optical isolation based on nonreciprocal micro-ring resonator. *Journal of Lightwave Technology*, 2011, vol. 29 (11), 1647-1651
- **ZHANG, Y. et al.** Monolithic integration of broadband optical isolators for polarization-diverse silicon photonics. *Optica*, 2019, vol. 6 (4), 473
- **SRINIVASAN, K. et al.** High-gyrotropy seedlayer-free CE:TbIG for monolithic laser-matched SOI optical isolators. *Conference on Lasers and Electro-Optics*, 2020

- **ZONGFU YU** ; **SHANHUI FAN**. Integrated non-magnetic optical isolators based on photonic transitions. *IEEE Journal of Selected Topics in Quantum Electronics*, 2010, vol. 16 (2), 459-466
- **WANG, C.** ; **ZHONG, X.-L.** ; **LI, Z.-Y.** Linear and passive silicon optical isolator. *Scientific Reports*, 2012, vol. 2 (1)
- **RUESINK, F. et al.** Nonreciprocity and magnetic-free isolation based on optomechanical interactions. *Nature Communications*, 2016, vol. 7 (1)
- **KITTLAUS, E.A. et al.** Electrically driven acousto-optics and broadband nonreciprocity in Silicon Photonics. *Nature Photonics*, 2020, vol. 15 (1), 43-52
- **TIAN, H. et al.** Magnetic-free silicon nitride integrated optical isolator. *Nature Photonics*, 2021, vol. 15 (11), 828-836
- **GOSWAMI, K. et al.** Design and analysis of all-optical isolator based on linear photonic crystal. *Brazilian Journal of Physics*, 2022, vol. 52 (3)
- **YU, M. et al.** Integrated electro-optic isolator on thin-film lithium niobate. *Nature Photonics*, 2023, vol. 17 (8), 666-671
- **ZVEZDIN, A.K.** ; **ZVEZDIN, A.K.** ; **KOTOV, V.A.** Modern magnetooptics and magnetooptical materials. CRC Press Taylor & Francis Group, 2020
- **TEPPER, T.** ; **ROSS, C.A.** Pulsed laser deposition and refractive index measurement of fully substituted bismuth iron garnet films. *Journal of Crystal Growth*, 2003, vol. 255 (3-4), 324-331
- **CHUANG, S.L.** Physics of optoelectronic devices. Wiley, 1995